(19) **Europäisches Patentamt / European Patent Office / Office européen des brevets**

(11) **EP 2 521 353 A1**

(12) **EUROPEAN PATENT APPLICATION**
published in accordance with Art. 153(4) EPC

(43) Date of publication:
**07.11.2012 Bulletin 2012/45**

(51) Int Cl.:
***H04N 7/173*** *(2011.01)*

(21) Application number: **10840894.9**

(22) Date of filing: **17.12.2010**

(86) International application number:
**PCT/JP2010/072738**

(87) International publication number:
**WO 2011/081036 (07.07.2011 Gazette 2011/27)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **29.12.2009 JP 2009299241**

(71) Applicant: **Sharp Kabushiki Kaisha**
**Osaka-shi, Osaka 545-8522 (JP)**

(72) Inventors:
• **SETO, Mikio**
**Osaka-shi, Osaka 545-8522 (JP)**
• **YAMAMOTO, Kenichiroh**
**Osaka-shi, Osaka 545-8522 (JP)**

• **SHIOI, Masahiro**
**Osaka-shi, Osaka 545-8522 (JP)**
• **OHTSU, Makoto**
**Osaka-shi, Osaka 545-8522 (JP)**
• **SUENAGA, Takeaki**
**Osaka-shi, Osaka 545-8522 (JP)**
• **TSUKUBA, Takeshi**
**Osaka-shi, Osaka 545-8522 (JP)**

(74) Representative: **Müller - Hoffmann & Partner**
**Patentanwälte**
**Innere Wiener Strasse 17**
**81667 München (DE)**

(54) **IMAGE PROCESSING DEVICE, IMAGE PROCESSING METHOD, AND IMAGE PROCESSING PROGRAM**

(57)   An image processing apparatus, an image processing method and an image processing program are provided, which enable obtaining of useful information from a facial image by enlarging the facial image of a person shown on a display even when, for example, a small display is used to watch a program. The apparatus includes: an input portion 14 for inputting an image including a facial image; a facial image extracting portion 16 for extracting a facial image from the image; and an image generating portion 18 for enlarging the facial image in accordance with the size of the image and size of the facial image. The facial image is enlarged in accordance with an enlargement ratio calculated based on, for example, the number of pixels for the image and the number of pixels for the facial image.

FIG. 16

**Description**

BACKGROUND

1. Technical Field

The present invention relates to an image processing apparatus, an image processing method and an image processing program capable of enlarging a facial image included in an image.

2. Description of Related Art

One of the expressive means for deforming a motif by exaggerating or highlighting the feature thereof in the field of art such as painting or sculpture is a deformation (hereinafter referred to as "deforming process"). The deforming process is often used in the field of entertainment such as comics, animation or games. The deforming process is performed by drawing the face of a character to be large and the other part of the body to be small so as to express the character in two or three heads high. From the enlarged face, various kinds of useful information can be obtained such as information regarding identification of an individual, information regarding emotion and information received by lip reading.

Patent Document 1 discloses a game device for facilitating the understanding of a facial expression by deforming a facial image of a real person to generate a character image of approximately two heads high.

Patent Document 1: Japanese Patent Application Laid-Open No. 2004-313225

SUMMARY OF THE INVENTION

The number of users has been increased who watch video image contents such as television programs, news programs or English language programs using mobile terminals such as mobile phones with small displays, mobile digital music players or the like. If, however, video image contents created for a large-screen display installed in home are shown on a small display of a mobile terminal or if video image contents expressed with a large number of pixels are reduced in size by downsampling it to have a small number of pixels, the total number of pixels for the facial image is reduced. Thus, compared to the case with the large-screen display, the amount of various kinds of information that can be obtained from the facial image shown on the display, i.e., information for identifying an individual, information on emotion, and information received by lip reading, is considerably reduced.

The device according to Patent Document 1 is to attach a facial image of a real person to an animation image deformed to be two heads high, which is prepared in advance, as in a game device, not to perform a deforming process to an image of a real person shown by a television program, movie or the like. Moreover, the facial image is not enlarged to have an appropriate size in accordance with the screen size of a display on a mobile phone, the size of a displayed image or the number of pixels.

The present invention has been contrived in view of the above circumstances. An object of the invention is to provide an image processing apparatus, an image processing method and an image processing program that can obtain useful information described above from a facial image by enlarging the facial image of a person shown on the display, even when the user watches a program on, for example, a small display.

An image processing apparatus for performing image processing according to the present invention includes: an image obtaining means for obtaining an image; an extracting means for extracting a facial image included in the image obtained by the image obtaining means; an enlarging means for enlarging the facial image extracted by the extracting means in accordance with a size of the image obtained by the image obtaining means and a size of the facial image; and a means for synthesizing the facial image enlarged by the enlarging means and the image obtained by the image obtaining means.

According to the present invention, since a facial image is extracted from an image and the extracted facial image is enlarged, various kinds of useful information, such as information related to identification of an indivisual, information on emotion and information received by lip reading, can be obtained from an enlarged facial image. More specifically, in the present invention, the facial image extracted from an image is enlarged based on the size of the image and the size of the facial image, allowing enlargement of the facial image at an appropriate size in accordance with the size of the image including the facial image.

An image processing apparatus for performing image processing according to the present invention includes: an image obtaining means for obtaining an image; an extracting means for extracting a facial image included in the image obtained by the image obtaining means; a means for reducing the image obtained by the image obtaining means; an obtaining means for obtaining information regarding reduction of an image; an enlarging means for enlarging the facial image extracted by the extracting means in accordance with a size of the image obtained by the image obtaining means, the size of the facial image and the information obtained by the obtaining means; and a means for synthesizing the facial image enlarged by the enlarging means and the image obtained by the image obtaining means.

According to the present invention, since an image is reduced in accordance with information related to reduction of the image while a facial image included in the reduced image is enlarged, useful information can be obtained from the facial image even when the image is reduced.

An image processing apparatus for performing image processing according to the present invention includes: an image obtaining means for obtaining an image; an extracting means for extracting a facial image included in the image obtained by the image obtaining means; a distance measurement means for measuring a distance from an external object; an enlarging means for enlarging the facial image extracted by the extracting means in accordance with a size of the image obtained by the image obtaining means, a size of the facial image and the distance measured by the distance measurement means; and a means for synthesizing the facial image enlarged by the enlarging means and the image obtained by the image obtaining means.

According to the present invention, a facial image is enlarged in accordance with the distance between an image display apparatus and an external object such as a viewer, so that useful information can be obtained from the facial image even if a display screen looks small because of a longer viewing distance.

In the image processing apparatus according to the present invention, the enlarging means includes: an enlargement ratio calculating portion for calculating an enlargement ratio based on the number of pixels for the image and the number of pixels for the facial image; and an enlarging portion for enlarging the facial image in accordance with the enlargement ratio calculated by the enlargement ratio calculating portion.

According to the present invention, since a facial image is enlarged in accordance with an enlargement ratio calculated based on the number of pixels for an image and the number of pixels for the facial image, useful information can be obtained from the facial image.

In the image processing apparatus according to the present invention, the enlargement ratio calculating portion calculates the enlargement ratio in accordance with a ratio of the number of pixels for the image to the number of pixels for the facial image.

According to the present invention, since the enlargement ratio is calculated in accordance with the ratio of the number of pixels for the image to the number of pixels for the facial image to enlarge the facial image in accordance with the enlargement ratio, useful information can be obtained from the facial image.

The image processing apparatus according to the present invention further includes a means for reducing the enlargement ratio if the facial image enlarged in accordance with the enlargement ratio calculated by the enlargement ratio calculating portion exceeds a specific size. The enlarging portion enlarges the facial image with the enlargement ratio reduced by the enlargement ratio calculating portion.

According to the present invention, if the size of the facial image enlarged with the enlargement ratio calculated based on the ratio of the number of pixels for the image to the number of pixels for the facial image is larger than a specific size, the enlargement ratio is reduced and the facial image is enlarged with the reduced enlargement ratio. Thus, the facial image can be so enlarged as to fit in a display screen.

An image processing apparatus for performing image processing according to the present invention includes: an image obtaining means for obtaining an image; an image reducing means for reducing the image obtained by the image obtaining means; an extracting means for extracting a facial image from the image obtained by the image obtaining means; a facial image reducing means for reducing the facial image extracted by the extracting means with a reduction ratio smaller than a reduction ratio for the image reduced by the image reducing means; and a means for synthesizing the image reduced by the image reducing means and the facial image reduced by the facial image reducing means.

According to the present invention, an image is reduced while a facial image is extracted from the reduced image, and the extracted facial image is reduced while the reduced facial image and the reduced image are synthesized. Thus, the facial image shown on a display screen can be enlarged even in the case where a reduced facial image is used.

An image processing method for performing image processing according to the present invention includes: an image obtaining step of obtaining an image; an extracting step of extracting a facial image included in the image obtained by the image obtaining step; an enlarging step of enlarging the facial image extracted by the extracting step in accordance with a size of the image obtained by the image obtaining step and a size of the facial image; and a step of synthesizing the facial image enlarged by the enlarging step and the image obtained by the image obtaining step.

According to the present invention, since the enlarging process is performed on the facial image extracted from an image, various kinds of useful information such as information related to individual identification, information on emotion and information received by lip reading can be obtained from the facial image. More specifically, according to the present invention, the facial image extracted from an image can be enlarged at an appropriate size based on the size of the image including the facial image, because the facial image is enlarged in accordance with the size of the image and the size of the facial image.

An image processing method for performing image processing according to the present invention includes: an image obtaining step of obtaining an image; an extracting step of extracting a facial image included in the image obtained by the image obtaining step; an image reducing step of reducing the image obtained by the image obtaining step; an obtaining step of obtaining information regarding reduction of an image; an enlarging step of enlarging the facial image extracted by the extracting step in accordance with a size of the image obtained by the image obtaining step, a size of the facial image and the information obtained by the obtaining step; and a step of synthesizing the facial image enlarged by the enlarging step and the image obtained by the image obtaining step.

According to the present invention, an image is reduced in accordance with information related to reduction of the image and a facial image included in the reduced image is enlarged, so that useful information can be obtained from the facial image even when the image is reduced.

An image processing method for performing image processing according to the present invention includes: an image obtaining step of obtaining an image; an extracting step of extracting a facial image included in the image obtained by the image obtaining step; a distance measurement step of measuring a distance from an external object; an enlarging step of enlarging the facial image extracted by the extracting step in accordance with a size of the image obtained by the image obtaining step, a size of the facial image and the distance measured by the distance measurement step; and a step of synthesizing the facial image enlarged by the enlarging step and the image obtained by the image obtaining step.

According to the present invention, since the facial image is enlarged in accordance with the distance between an image display apparatus and an external object such as a viewer, useful information can be obtained from the facial image even under an undesirable viewing condition.

An image processing program for making a computer perform image processing according to the present invention makes the computer function as: an extracting means for extracting a facial image from an image including the facial image; an enlarging means for enlarging the facial image extracted by the extracting means in accordance with a size of the image and a size of the facial image; and a means for synthesizing the facial image enlarged by the enlarging means and the image.

According to the present invention, since an enlarging process is performed on the facial image extracted from an image, useful information can be obtained from the facial image. More specifically, according to the present invention, the facial image is enlarged based on the size of the image and the size of the facial image extracted from the image, allowing the facial image to be enlarged at an appropriate size in accordance with the size of the image including the facial image.

An image processing program for making a computer perform image processing according to the present invention makes the computer function as: an extracting means for extracting a facial image from an image including the facial image; a reducing means for reducing an image; an enlarging means for enlarging the facial image extracted by the extracting means in accordance with a size of the image, a size of the facial image and information regarding reduction of the image; and a means for synthesizing the facial image enlarged by the enlarging means and the image.

According to the present invention, since an image is reduced in accordance with information related to reduction of the image while the facial image included in the reduced image is enlarged, useful information can be obtained from the facial image even if the image is reduced.

An image processing program for making a computer perform image processing according to the present invention makes the computer function as: an extracting means for extracting a facial image from an image including the facial image; an enlarging means for enlarging the facial image extracted by the extracting means in accordance with a size of the image, a size of the facial image and a distance from an external object; and a means for synthesizing the facial image enlarged by the enlarging means and the image.

According to the present invention, since the facial image is enlarged based on the distance between an image display apparatus and an external object such as a viewer, useful information can be obtained from the facial image even under an undesirable viewing condition with a longer viewing distance.

According to the image processing apparatus, image processing method and image processing program of the present invention, as the enlarging process is performed on a facial image included in an image, a viewer can obtain useful information from the facial image even in the case where a display screen for showing the image is small.

BRIEF DESCRIPTION OF THE SEVERAL VIEWS OF THE DRAWINGS

Fig. 1 is a block diagram illustrating a configuration example of an image processing apparatus according to Embodiment 1;
Fig. 2 is an explanatory view illustrating an example of a display image before an enlarging process is performed on a facial image;
Fig. 3 is an explanatory view illustrating an example of a parameter applied to enlarge a facial image of a person depicted in a display image;
Fig. 4 is an explanatory view illustrating an example of a synthetic image depicted in a display image and obtained by synthesizing a display image and an enlarged facial image;

Fig. 5 is a flowchart illustrating the flow of image processing in an image processing apparatus according to Embodiment 1;

Fig. 6 is an explanatory view illustrating an example of a relationship between a display screen of an image display device and a display image in Embodiment 2;

Fig. 7 is a block diagram illustrating a configuration example of an image processing apparatus according to Embodiment 2;

Fig. 8 is a flowchart illustrating the flow of image processing performed by the image processing apparatus according to Embodiment 2;

Fig. 9 is a block diagram illustrating a configuration example of an image processing apparatus according to Embodiment 3;

Fig. 10 is a flowchart illustrating the flow of image processing performed by the image processing apparatus according to Embodiment 3;

Fig. 11 is an explanatory view illustrating an example of a screen on which an object to be enlarged is displayed;

Fig. 12 is an explanatory view illustrating an example of a screen where the first menu screen is displayed at an upper part of the display screen shown in Fig. 11;

Fig. 13 is an explanatory view illustrating a screen example of the second menu screen newly displayed when "Function Setting" is selected on the first menu screen shown in Fig. 12;

Fig. 14 is an explanatory view illustrating a screen example of the third menu screen newly displayed when "Face Deformation Mode" is selected on the second menu screen shown in Fig. 13;

Fig. 15 is an explanatory view illustrating a screen example of the fourth menu screen newly displayed when "Detailed Setting" is selected on the third menu screen shown in Fig. 14;

Fig. 16 is an explanatory view illustrating a facial image enlarging process according to Embodiment 4;

Fig. 17 is a flowchart illustrating the flow of image processing according to Embodiment 4; and

Fig. 18 is a block diagram illustrating a configuration example regarding execution of a program in an image processing apparatus according to Embodiment 5.

DETAILED DESCRIPTION

Embodiments according to the present invention will be described below in detail with reference to the drawings.

Embodiment 1

An image processing apparatus according to Embodiment 1 has a configuration in which a deformation process is performed on a facial image in accordance with the number of pixels for image data and the number of pixels for the facial image included in the image data.

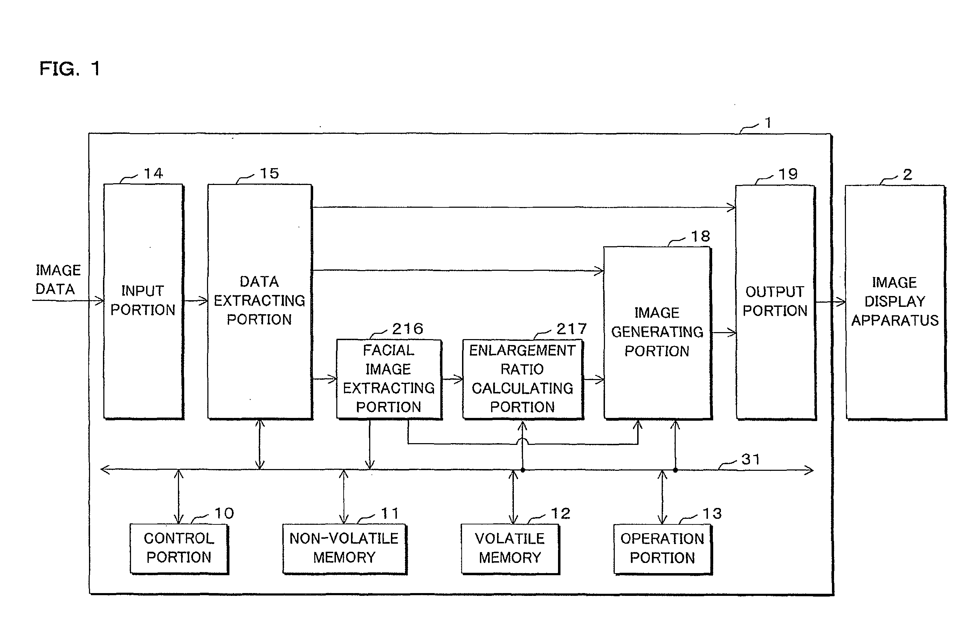

Fig. 1 is a block diagram illustrating a configuration example of an image processing apparatus 1 according to Embodiment 1.

The image processing apparatus 1 includes a control portion 10, a non-volatile memory 11, a volatile memory 12, an operation portion 13, an input portion 14, a data extracting portion 15, a facial image extracting portion 16, an enlargement ratio calculating portion 17, an image generating portion 18 and an output portion 19. Each of the components is connected to one another via a bus 31. Furthermore, the image processing apparatus 1 is connected to an image display apparatus 2 through the output portion 19.

The control portion 10 is configured with, for example, a Central Processing Unit (CPU) or Micro Processor Unit (MPU) to control the operation of each component through the bus 31.

The operation portion 13 is, for example, a device used for data input, such as a mouse, keyboard, touch-sensitive panel, button or switch. The operation portion 13 may also be a remote controller which utilizes infrared, electric wave or the like to transmit control signals to the image processing apparatus 1 by remote control.

The input portion 14 obtains image data from an image device such as, for example, a digital broadcast tuner, a Hard Disk (HD) drive, a Digital Versatile Disc (DVD) drive, a personal computer or a digital camera. The image data is compressed image data included in Transport Stream (TS) which is compressed and encoded by, for example, Moving Picture Experts Group (MPEG) -2 format. The input portion 14 outputs the compressed image data obtained from the image device to the data extracting portion 15. The TS is one of multiple signal forms and is employed as multiplexed signals in digital broadcasting. The TS corresponds to a signal line including a series of TS packets, each of the TS packets being provided with header information.

The data extracting portion 15 decodes the compressed image data obtained from the input portion 14 while analyzing header information so as to obtain the total number of pixels, the number of pixels in the vertical line and the number of pixels in the horizontal line for the entire image (hereinafter referred to as "display image"), and to output the obtained result to the control portion 10. Furthermore, the data extracting portion 15 outputs decoded image data to the facial image extracting portion 16 and image generating portion 18, or to the output portion 19.

The facial image extracting portion 16 obtains image data from the data extracting portion 15, extracts a facial image from an image corresponding to the image data and obtains the total number of pixels for the extracted facial image. The process of extracting the facial image can utilize a known face recognition technique or object extraction technique. The facial image extracting portion 16 outputs, to the control portion 10, the total number of pixels for the extracted facial image, coordinates of a reference point (hereinafter also referred to as "reference coordinates") for the extracted facial image and the number of vertical pixels and the number of horizontal pixels used when the facial image is cut out to fit within a rectangle. Moreover, the facial image extracting portion 16 outputs facial image data corresponding to the facial image to the image generating portion 18. Note that the reference coordinates are coordinates used as a reference in enlarging the facial image, details of which will be described later.

The control portion 10 determines whether or not an enlarging process is performed on a facial image as described below.

The control portion 10 obtains the total number of pixels for a display image from the data extracting portion 15. Moreover, the control portion 10 obtains the number of total pixels for the facial image from the facial image extracting portion 16. Moreover, the control portion 10 reads out a threshold (THp) from the non-volatile memory 11. The control portion 10 determines whether or not the enlarging process is performed on the facial image with reference to the threshold read out from the non-volatile memory 11.

More specifically, the control portion 10 compares the ratio of the total number of pixels for display image to the total number of pixels for facial image (total number of pixels for display image / total number of pixels for facial image) with the threshold, and determines that the enlarging process is performed on the facial image if the ratio of the total number of pixels for display image to the total number of pixels for facial image is equal to or more than the threshold. If, on the other hand, the ratio of the total number of pixels for the display image to the total number of pixels for the facial image is less than the threshold, the control portion 10 determines that no enlarging process is performed on the facial image.

Though the threshold corresponds to the value read out from the non-volatile memory 11 in the configuration described above, it may alternatively be a value set by the user operating a slide bar of Graphical User interface (GUI) shown on a menu screen displayed by the image display apparatus 2. This configuration allows the user to easily change the threshold with the use of the operation portion 13.

If it is determined that the enlarging process is performed on the facial image, the control portion 10 outputs the total number of pixels, the number of vertical pixels and the number of horizontal pixels for the display image, the total number of pixels, the number of vertical pixels and the number of horizontal pixels for the facial image, and the reference coordinates for the facial image to the enlargement ratio calculating portion 17. Moreover, if the control portion 10 determines that the enlarging process is performed on the facial image, the data extracting portion 15 outputs facial image data to the image generating portion 18. If, on the other hand, the control portion 10 determines that no enlarging process is performed on the facial image, the data extracting portion 15 directly outputs image data to the output portion 19. Furthermore, the control portion 10 outputs the result of determination, indicating whether or not the enlarging process is performed on the facial image, to the output portion 19.

The enlargement ratio calculating portion 17 calculates an enlargement ratio for the facial image (AR_Face) based on the total number of pixels for the facial image and the total number of pixels for the display image obtained from the control portion 10. The enlargement ratio for the facial image (AR_Face) is calculated by a formula (1).

$$AR\_Face = \alpha \times (T\_pix\ /\ P\_pix) \qquad (1)$$

wherein

$\alpha$: any given constant
T_pix: total number of pixels for display image
P_pix: total number of pixels for facial image

Though an initial set value for $\alpha$ may be, for example, 0.01, it is understood that the value is not limited thereto. The initial value set for $\alpha$ is stored in the non-volatile memory 11 in advance, while the enlargement ratio calculating portion 17 reads $\alpha$ from the non-volatile memory 11 at the time of calculating the enlargement ratio. The value for $\alpha$ may, however, appropriately be changed by the user operating a GUI slide bar shown on a menu screen displayed by the image display apparatus 2. The value of $\alpha$ changed by operating the slide bar is then stored in the non-volatile memory 11.

Subsequently, the enlargement ratio calculating portion 17 determines whether or not the enlargement ratio of the facial image (AR_Face) calculated by the formula (1) needs to be corrected. If, for example, the enlargement factor of the facial image (AR_Face) calculated by the formula (1) is too large, the enlarged facial image may not fit in the display screen. In such a case, the enlargement value calculating portion 17 corrects the enlargement ratio for the facial image (AR_Face) calculated by the formula (1) so that the enlarged facial image fits in the display screen. More specifically, the enlargement ratio calculating portion 17 reduces the enlargement ratio of the face, for example, in accordance with the formulas (2) and (3) below.

$$\text{If } AR\_Face > (Y\_all\text{-}Y\_base)/Y\_face,$$
$$\text{Corrected } AR\_Face = (Y\_all\text{-}Y\_base)/Y\_face \qquad (2)$$

$$\text{If } AR\_Face > (X\_all\text{-}X\_base)/X\_face,$$
$$\text{Corrected } AR\_Face = (X\_all\text{-}X\_base)/X\_face \qquad (3)$$

wherein

Y_all: number of vertical pixels for display image
Y_face: number of vertical pixels for facial image
X_all: number of horizontal pixels for display image
X_face: number of horizontal pixels for facial image
(X_base, Y_base): coordinates for reference point
(0, 0): coordinates for original point

Various parameters used in the formulas, i.e., details of the numbers of pixels and reference coordinates will now be described with reference to the drawings.

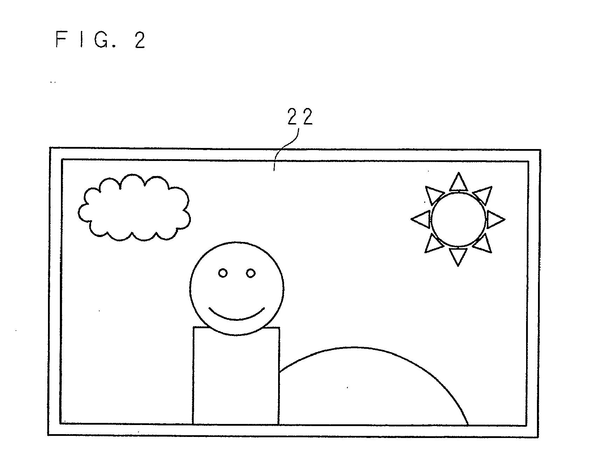

Fig. 2 is an explanatory view illustrating an example of a display image before an enlarging process is performed on a facial image.

In Fig. 2, a face of a person is drawn at the central part of a display image 22. A trunk of the body is shown under the face. As a background, a cloud, a mountain and the sun are shown at the upper left, the right side of the screen next to the person and the upper right of the screen, respectively.

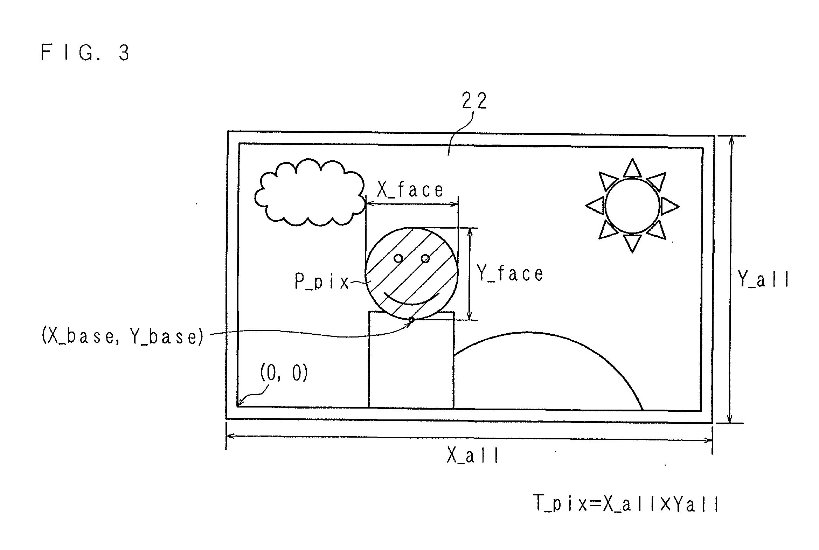

Fig. 3 is an explanatory view illustrating an example of parameters applied to enlarge the facial image of the person shown in a display image 22.

In Fig. 3, the display image 22 shows the person and background as illustrated in Fig. 2. Moreover, for the sake of convenience, various parameters described above are specified for indicating the respective sizes of the person, background and display image 22. Furthermore, diagonal lines are shown on the facial image for convenience in order to distinguish the facial image from the background image. In Fig. 3, the reference coordinates (X_base, Y_base) are arranged directly below the chin of the face.

Note that the reference coordinates may be positioned at the barycenter of the face, e.g. nose, or another position. To determine the position of the reference coordinates, however, it is preferable to select a position at which a viewer of the image would not feel discomfort because of the face overlapped with another part of the body by enlarging the facial image, causing an imbalanced positional relationship between the face and body.

The coordinates of original point (0, 0) are coordinates used as a reference for the position of the reference coordinates and are located at the lower left of the display image 22 in Fig. 3. The reference coordinates correspond to a position of a reference point for enlarging the face. In Embodiment 1, the facial image is enlarged from the reference point, set as a starting point, toward the upper side of the display image 22. When the facial image is thus enlarged, the facial image will not overlap with a body part other than the face (the trunk, for example).

If the enlargement ratio is not corrected by the formula (2) or (3), the enlargement ratio calculating portion 17 outputs the enlargement ratio (AR_Face) calculated by the formula (1) as it is. If, on the other hand, the enlargement ratio (AR_Face) is corrected by the formula (2) or (3), the enlargement ratio (AR_Face) after correction is output to the image generating portion 18.

The image generating portion 18 enlarges the facial image in accordance with the enlargement ratio (AR_Face) obtained from the enlargement ratio calculating portion 17 to generate an enlarged facial image. More specifically, the image generating portion 18 enlarges the facial image from the reference point, set as a starting point, toward the direction of nose. In the case of the display image 22, the image generating portion 18 enlarges the facial image toward the upper direction of the display image 22 because the person illustrated here is standing. Also in the case where, for example, the person is lying down on the floor and thus is facing sideways, the image generating portion 18 enlarges the facial image toward the direction of nose based on the reference point set as the starting point. As for the process of detecting the position of nose, a known face recognition technique may be utilized.

The image generating portion 18 synthesizes the generated enlarged facial image and the display image obtained from the data extracting portion 15 to generate synthetic image data and output it to the output portion 19.

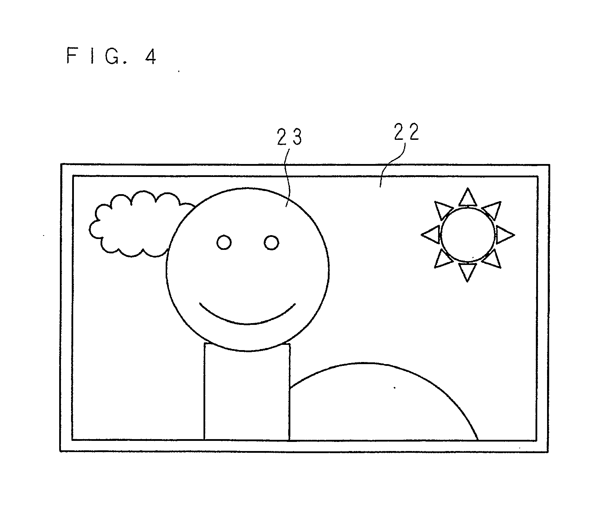

Fig. 4 is an explanatory view illustrating an example of a synthetic image which is shown in the display image 22 and is obtained by synthesizing the enlarged facial image 23 and the display image 22.

As can be seen from Fig. 4, the image generating portion 18 generates an image in which only the facial image shown in Fig. 2 is enlarged.

The output portion 19 obtains a result of determination, from the control portion 10, on whether or not the enlarging process is performed on the facial image. If the enlarging process is performed on the facial image, the output portion 19 outputs the synthetic image data obtained from the image generating portion 18 to the image display apparatus 2. If, on the other hand, the enlarging process for the facial image is not performed, the output portion 19 outputs the image data obtained from the data extracting portion 15 to the image display apparatus 2.

The image display apparatus 2 includes a display screen such as, for example, a liquid-crystal panel, an organic Electro-Luminescence (EL) display or a plasma display, and displays an image on the display screen based on the image data obtained from the output portion 19.

Next, the flow of the image processing performed at the image processing apparatus 1 according to Embodiment 1 will be described.

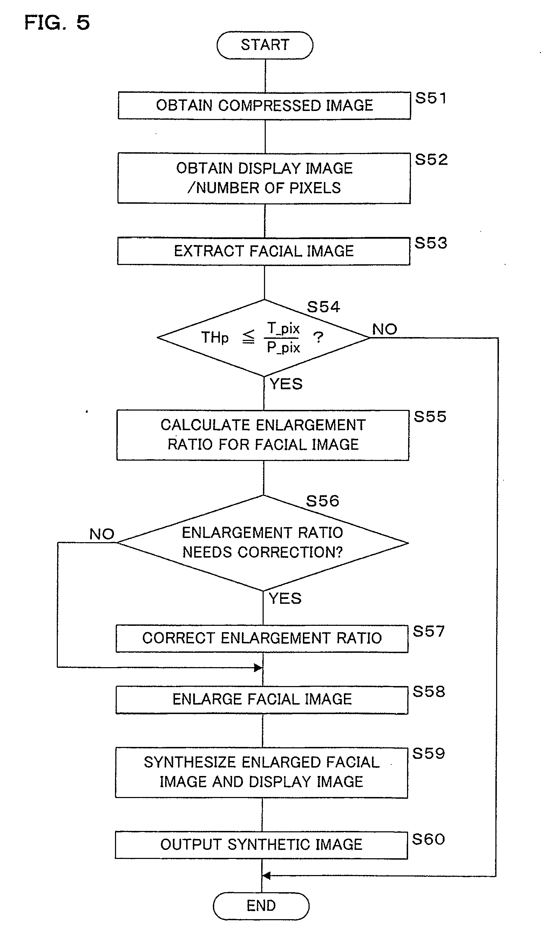

Fig. 5 is a flowchart illustrating the flow of the image processing performed at the image processing apparatus 1 according to Embodiment 1.

The input portion 14 obtains compressed image data from the outside (S51).

The data extracting portion 15 decodes compressed image data obtained from the input portion 14 while analyzing header information and extracting the total number of pixels for the display image (T_pix) to output it to the control portion 10 (S52). Moreover, the data extracting portion 15 outputs image data to the facial image extracting portion 16.

The facial image extracting portion 16 extracts a facial image from an image corresponding to the image data obtained from the data extracting portion 15, obtains the total number of pixels for the facial image (P_pix) and outputs it to the control portion 10 (S53).

The control portion 10 reads out a threshold value (THp) from the non-volatile memory 11 and compares the ratio (T_pix/ P_pix) of the total number of pixels for display image (T_pix) to the total number of pixels for facial image (P_pix) with a threshold, to determine whether or not an enlarging process is performed on the facial image (S54). More specifically, if the ratio (T_pix/ P_pix) of the total number of pixels for display image (T_pix) to the total number of pixels for facial image (P_pix) is equal to or more than the threshold (S54: YES), the control portion 10 determines that the enlarging process is to be performed on the facial image. In response to this, the enlargement ratio calculating portion 17 calculates the enlargement ratio for the facial image (AR_Face) (S55). Subsequently, the enlargement ratio calculating portion 17 determines whether or not the calculated enlargement ratio for the facial image (AR_Face) needs to be corrected (S56). If the enlargement ratio calculating portion 17 determines that correction is needed (S56: YES), the enlargement ratio is corrected (S57). If the enlargement ratio calculating portion 17 determines that no correction is needed (S56: NO), the processing moves on to step S58.

The image generating portion 18 enlarges the facial image in accordance with the enlargement ratio (AR_Face) obtained from the enlargement ratio calculating portion 17 to generate an enlarged image (S58). The image generating portion 18 synthesizes the enlarged facial image and display image (S59). The image generating portion 18 outputs the generated synthetic image data to the output portion 19 (S60) and terminates the processing.

If the ratio (T_pix/P_pix) of the total number of pixels for display image (T_pix) and the total number of pixels for facial image (P_pix) (T_pix/P_pix) is less than a threshold (S54: NO), the control portion 10 determines that no enlarging process is performed on the facial image. The output portion 19 outputs the image data obtained from the data extracting portion 15 to the image display apparatus 2 if no enlarging process is performed on the facial image, and terminates the processing.

As has been described above, in Embodiment 1, the enlargement ratio for the facial image is calculated based on the total number of pixels for the display image 22, the total number of pixels for facial image and the reference coordinates for the facial image. Furthermore, in Embodiment 1, the enlargement ratio is corrected if the facial image enlarged with that ratio would not fit in the display screen. That is, the enlargement ratio is so reduced that the enlarged facial image fits in the display screen.

According to Embodiment 1, an enlarging process can be performed on the facial image of a person shown on the display. Accordingly, even a facial image shown on a small display such as a display on a mobile device may be enlarged to obtain various kinds of useful information, i.e. information regarding identification of an individual, information on emotion, information received by lip reading can be obtained.

Embodiment 2

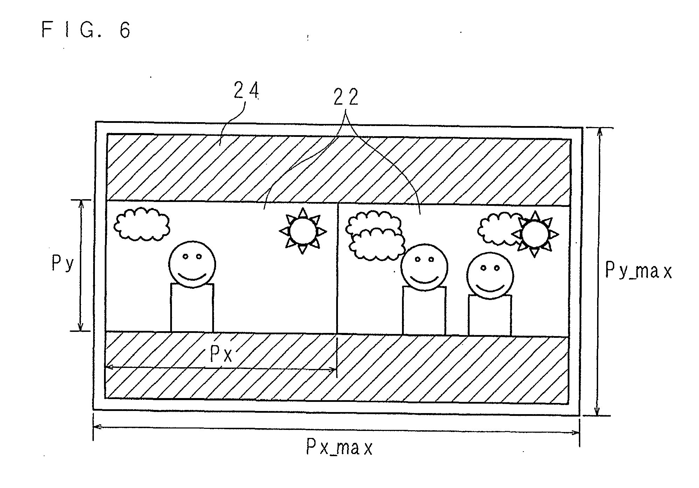

Fig. 6 is an explanatory view illustrating an example of the relationship between a display screen of an image display device and a display image in Embodiment 2. Fig. 6 illustrates a display image 22 and a display screen 24 in, for example, a double-tuner television. Here, the screen for the entire display of the television is referred to as the display screen 24, while the size of the display screen 24 is referred to as a screen size. Moreover, an image displayed as a moving image in a part of the display screen 24 is referred to as a display image, while the size of the display image is referred to as a display image size.

In the example shown in Fig. 6, the display images 22 having the same display image size are shown side by side in the display screen 24 of the image display apparatus 2. As can be seen from Fig. 6, the total size of the two display images 22 corresponds to half the screen size of the image display apparatus 2. In other words, the number of vertical pixels and the number of horizontal pixels in one display image 22 correspond to half the number of vertical pixels and horizontal pixels, respectively, for the display screen 24.

The image processing apparatus according to Embodiment 2 corrects an enlargement ratio in accordance with the display screen size of the display image 22 shown in the display screen 24. Embodiment 2 can be implemented in combination with Embodiment 1.

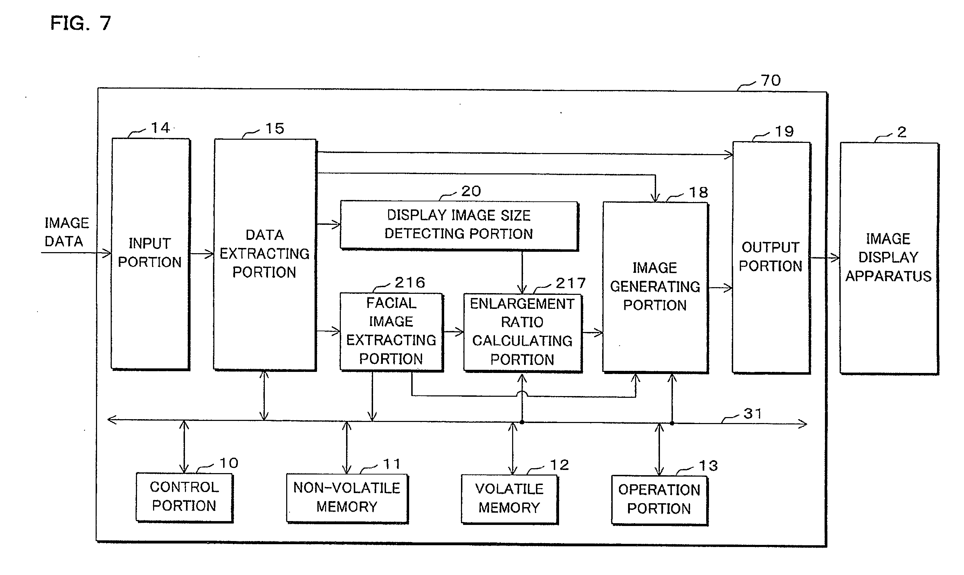

Fig. 7 is a block diagram illustrating a configuration example of the image processing apparatus according to Embodiment 2.

An image processing apparatus 70 in Embodiment 2 includes a control portion 10, a non-volatile memory 11, a volatile memory 12, an operation portion 13, an input portion 14, a data extracting portion 15, a facial image extracting portion 216, an enlargement ratio calculating portion 217, an image generating portion 18, an output portion 19 and a display image size detecting portion 20. These components are connected with each other via a bus 31.

The input portion 14 obtains image data from an image device such as, for example, a digital broadcast tuner, a HD drive, a DVD drive, a personal computer or a digital camera. The image data is compressed image data included in a compressed and encoded TS in MPEG-2 format. The input portion 14 outputs the compressed image data obtained from an image device to the data extracting portion 15.

The data extracting portion 15 decodes the compressed image data obtained from the input portion 14 while obtaining a Broadcast Markup Language (BML) file from the TS to output the BML file to the display image size detecting portion 20. The BML here is a page description language for data broadcasting based on Extensible Markup Language (XML), while the BML file is a file described in BML. In the BML file, the display image size of display image 22 shown on the display screen 24 of the image display apparatus 2, including the total number of pixels, the number of vertical pixels and the number of horizontal pixels for the display image, is described. Here, the display image size corresponds to information regarding reduction of an image.

The face image extracting portion 216 obtains image data from the data extracting portion 15, extracts a facial image from the image corresponding to the image data and obtains the total number of pixels for the extracted facial image. For the process of extracting the facial image, a known facial recognition technique or object extraction technique can be utilized. The facial image extracting portion 216 outputs the total number of pixels for the extracted facial image, the reference coordinates for the extracted facial image, and the number of vertical pixels and the number of horizontal pixels used when the facial image is so cut out as to fit in a rectangle, to the control portion 10.

The control portion 10 determines whether or not the enlarging process is performed on the facial image, as described below.

The control portion 10 obtains the total number of pixels for display image from the data extracting portion 15. The control portion 10 also obtains the total number of pixels for facial image from the facial image extracting portion 216. Furthermore, the control portion 10 reads out a threshold (THp) from the non-volatile memory 11. The control portion 10 determines whether or not the enlarging process is performed on the facial image with reference to the threshold read out from the non-volatile memory 11.

More specifically, the control portion 10 compares the ratio of the total number of pixels for display image to the total number of pixels for facial image (total number of pixels for display image/ total number of pixels for facial image) with the threshold, and determines that the enlarging process is performed on the facial image if the ratio of the total number of pixels for display image to the total number of pixels for facial image is equal to or more than the threshold. If, on the other hand, the ratio of the total number of pixels for display image to the total number of pixels for facial image is less than the threshold (THp), the control portion 10 determines that no enlarging process is performed on the facial image.

If the control portion 10 determines that the enlarging process is performed on the facial image, it outputs the total number of pixels, the number of vertical pixels and the number of horizontal pixels for the display image and those for the facial image, as well as the coordinates of the reference point for the facial image to the enlargement ratio calculating portion 217. Moreover, if the control portion 10 determines that the enlarging process is performed on the facial image, the data extracting portion 15 outputs the facial image data to the image generating portion 18. If, on the other hand, the control portion 10 determines that no enlarging process is performed on the facial image, the data extracting portion 15 directly outputs image data to the output portion 19. Furthermore, the control portion 10 outputs the result of determination on whether or not the enlarging process is performed on the facial image to the output portion 19.

The enlargement ratio calculating portion 217 calculates the enlargement ratio of facial image (AR_Face) based on the total number of pixels for facial image obtained from the control portion 10 and the total number of pixels for the display image obtained from the display image size detecting portion 20. The enlargement ratio of the facial image (AR_Face) is calculated by the formula (4).

$$AR\_Face = \alpha \times (T\_pix / P\_pix) \qquad (4)$$

wherein

$\alpha$: any given constant
T_pix: total number of pixels for display image (number of pixels described in BML file)
P_pix: total number of pixels for facial image

The display image size detecting portion 20 reads in the screen size of the display screen of the image display apparatus 2, i.e., the number of vertical pixels and the number of horizontal pixels, from the non-volatile memory 11. The screen size of the image display apparatus 2 is stored in the non-volatile memory 11 in advance. Here, the operation portion 13 may be provided with, for example, a slide bar indicated by GUI such that the screen size of the image display apparatus 2 may appropriately be changed to a value set by the slide bar. Thus changed screen size is stored in the non-volatile memory 11.

Subsequently, the display image size detecting portion 20 reads in the display image size, i.e. the number of vertical pixels and the number of horizontal pixels for the display image, from the BML file. The display image size detecting portion 20 calculates the size correction ratio (S_ratio) based on the screen size of the image display apparatus 2 and the display image size. The size correction ratio (S_ratio) is calculated by the formula (5).

$$S\_ratio = \{Px\_max^2 + Py\_max^2)\} / (Px^2 + Py^2) \}^{0.5} \quad (5)$$

wherein

Px: number of horizontal pixels for display image
Py: number of vertical pixels for display image
Px_max: number of horizontal pixels for display screen of image display apparatus 2
Py_max: number of vertical pixels for display screen of image display apparatus 2

For example, if the display image size corresponds to 960×540 (pixels) and the screen size of the image display apparatus 2 corresponds to 1920×1080 (pixels), the size correction ratio (S_ratio) =2 is satisfied. The display image size detecting portion 20 outputs the calculated size correction ratio (S_ratio) to the enlargement ratio calculating portion 217.

The enlargement ratio calculating portion 217 obtains the size correction ratio (S_ratio) from the display image size detecting portion 20 to correct the enlargement ratio (AR_Face) described earlier. For example, the enlargement ratio calculating portion 217 multiplies the enlargement ratio calculated by the formula (4) by the size correction ration (S_ratio). In other words, the enlargement ratio calculated by the formula (4) is changed as represented by the formula (6).

$$AR\_Face = S\_ratio \times \alpha \times (T\_pix / P\_pix) \qquad (6)$$

The initial set value for $\alpha$ is, for example, 0.01, though not limited thereto. Here, if the display image size (T_pix) described in the BML file is 960×540 (pixels), the total number of pixels for display image 22 will be 518,400. Furthermore, the total number of facial image (P_pix) will be the number of pixels for facial image obtained when the display image size (T_pix) corresponds to 960×540 (pixels).

In Embodiment 2, the size correction ratio (S_ratio) is utilized to correct the enlargement ratio (AR_Face) calculated by the formula (4). It is, however, also possible to use the size correction ratio (S_ratio) as it is. That is, the formula below may also be satisfied.

$$AR\_face = S\_ratio \qquad (7)$$

Moreover, as in Embodiment 1, the enlargement ratio (AR_face) calculated by the formula (6) or (7) may further be corrected using the formulas (2) and (3).

The enlargement ratio calculating portion 217 outputs the enlargement ratio calculated by the formula (6) or (7) to the image generating portion 18.

The image generating portion 18 enlarges a facial image in accordance with the enlargement ratio (AR_Face) obtained from the enlargement ratio calculating portion 217 to generate an enlarged facial image. Subsequently, the image generating portion 18 synthesizes the enlarged facial image and the display image 22 obtained from the data extracting portion 15 to generate synthetic image data, which is to be output to the output portion 19. The method of enlarging is similar to that in Embodiment 1.

The output portion 19 obtains, from the control portion 10, a result of determination on whether or not the enlarging process for facial image is performed. The output portion 19 outputs the synthetic image data obtained from the image generating portion 18 to the image display apparatus 2 if the enlarging process for facial image is performed, and outputs the image data obtained from the data extracting portion 15 to the image display apparatus 2 if the enlarging process for facial image is not performed.

The image display apparatus 2 includes a display screen such as, for example, a liquid-crystal panel, an organic EL display or a plasma display, and shows an image on the display screen based on the image data obtained from the output portion 19.

The flow of the image processing performed at the image processing apparatus 70 according to Embodiment 2 will now be described.

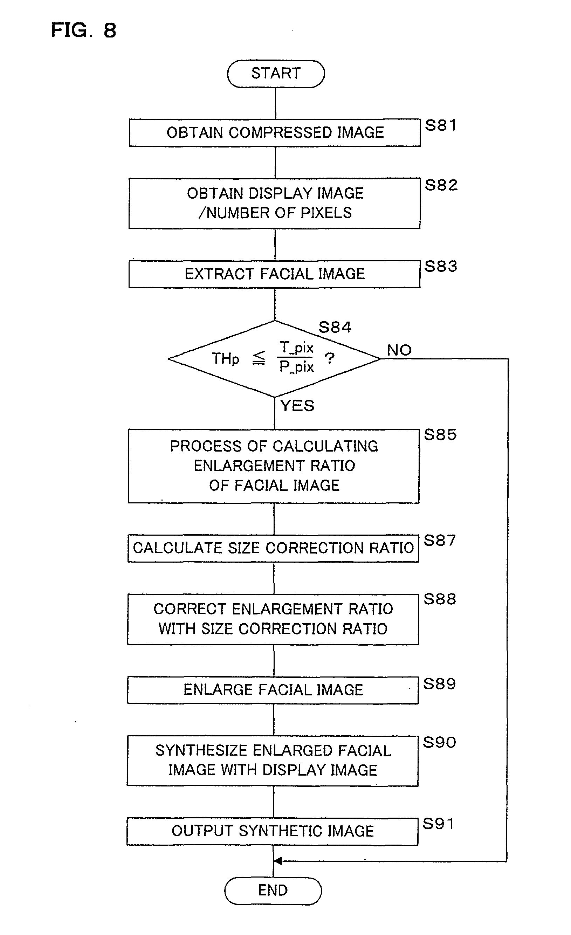

Fig. 8 is a flowchart illustrating the flow of image processing performed by the image processing apparatus 70 according to Embodiment 2.

The input portion 14 obtains compressed image data from the outside (S81).

The data extracting portion 15 decodes the compressed image data obtained from the input portion 14 while extracting the total number of pixels for display image 22 (T_pix) described in the BML file to output it to the control portion 10 and display image size detecting portion 20 (S82). The data extracting portion 15 also outputs the image data to the facial image extracting portion 216. The facial image extracting portion 216 extracts a facial image from the image corresponding to the image data obtained from the data extracting portion 15 and obtains the total number of pixels for facial image (P_pix) to output it to the control portion 10 (S83).

The control portion 10 reads in a threshold (THp) from the non-volatile memory 11 and compares the ratio (T_pix/ P_pix) of the total number of pixels for display image (T_pix) to the total number of pixels for facial image (P_pix) with the threshold, to determine whether or not the enlarging process is performed on the facial image (S84). More specifically, if the ratio (T_pix/ P_pix) of the total number of pixels for display image (T_pix) to the total number of pixels for facial image (P_pix) is equal to or higher than the threshold (S84: YES), the control portion 10 determines that the enlarging process is performed for the facial image. In response to this, the enlargement ratio calculating portion 217 calculates the enlargement ratio for facial image (AR_Face) (S85). Subsequently, the display image size detecting portion 20 calculates the size correction ratio (S_ratio) (S87).

More specifically, the display image size detecting portion 20 reads in the screen size of the display screen 24 of the image display apparatus 2 from the non-volatile memory 11 and further reads in the display image size from the BML file. The display image size detecting portion 20 uses the display image size and the screen size of the display screen 24 of the image display apparatus 2 to calculate the size correction ratio (S_ratio) in accordance with the formula (5).

The enlargement ratio calculating portion 217 multiplies the size correction ratio calculated at step S87 by the enlargement ratio of the facial image calculated at step S85 to correct the enlargement ratio calculated at step S85 (S88) and enlarge the facial image (S89).

The image generating portion 18 enlarges the facial image in accordance with the corrected enlargement ratio (AR_Face) obtained from the enlargement ratio calculating portion 217, generates an enlarged facial image, synthesizes the enlarged facial image with the display image (S90), generates synthetic image data, outputs the generated data to the output portion 19 (S91) and terminates the processing.

If the ratio (T_pix / P_pix) of the total number of pixels for display image 22 (T_pix) to the total number of pixels for facial image (P_pix) is less than the threshold (THp) (S84: NO), the control portion 10 determines that no enlarging process is performed on the facial image. If no enlargement process is performed on the facial image, the output portion 19 outputs the image data obtained from the data extracting portion 15 to the image display apparatus 2 and terminates the processing.

In the image processing apparatus 70 according to Embodiment 2, even if the display image size of the display image 22 on the display screen 24 of the image display apparatus 2 is small, the enlargement ratio may be corrected in accordance with the screen size of the image display apparatus 2 and display image size to generate an image with an enlarged facial image.

In Embodiment 2, the display image size detecting portion 20 reads in the screen size of the image display apparatus 2 from the non-volatile memory 11. The display image size detecting portion 20 may, however, also obtain the screen size of the image display apparatus 2 from Extended Display Identification Data (EDID) stored in the image display apparatus 2 via, for example, Display Data Channel (DDC) signals of the HDMI standard. The EDID includes, for example, the frequency, the screen size, the name of the manufacturer and the type of the device that are unique to the image display apparatus 2.

In Embodiment 2, the display image size detecting portion 20 reads in the display image size from the BML file in the course of the process of calculating the size correction ratio. It is, however, also possible for the display image size detecting portion 20 to generate a file of BML, XML, HTML (Hyper Text Markup Language) or the like in which the display image size is described based on a template file stored in the non-volatile memory 11 in advance. The display screen size to be described in the generated BML file or the like may be used in the process of calculating the size correction ratio. Such a BML file or the like is output from the display image size detecting portion 20 to the image display apparatus 2 through the output portion 19. Here, the display image size to be described in the BML file or the like may be rewritten by editing the template file through a screen and a keyboard, which may be provided at the operation portion 13.

Note that any means may be used for rewriting the display image size, not limited to the screen and keyboard. Alternatively, an image displayed on the screen of the image display apparatus 2 is monitored by the sensor of a camera or the like to detect the display image size. If the image data is output to a computer such as PC, the display image size of a window, an application screen or the like may also be obtained from the OS of the computer.

Embodiment 3

The image processing apparatus according to Embodiment 3 has a configuration of correcting the enlargement ratio based on the distance between a viewer and a display screen. The distance between the viewer and the display screen of the image display apparatus will hereinafter be referred to as "viewing distance."

In Embodiment 2, the enlargement ratio of the facial image is corrected in accordance with the display image size and the screen size. The display screen size recognized by the viewer may, however, vary depending on the viewing distance even if the screen size of the image display apparatus 2 and the display image size are constant. For example, the display image size looks the same when a video image of $1920\times1080$ (the number of horizontal pixels $\times$ vertical pixels) is viewed at a point two meters away from the display screen 24 and when a video image of $960\times540$ (the number of horizontal pixels $\times$ vertical pixels) is viewed at a point one meter away from the same display screen 24. Accordingly, in Embodiment 3, the enlargement ratio of the facial image is corrected in accordance with the viewing distance. Note that Embodiment 3 may be implemented in combination with Embodiments 1 and 2.

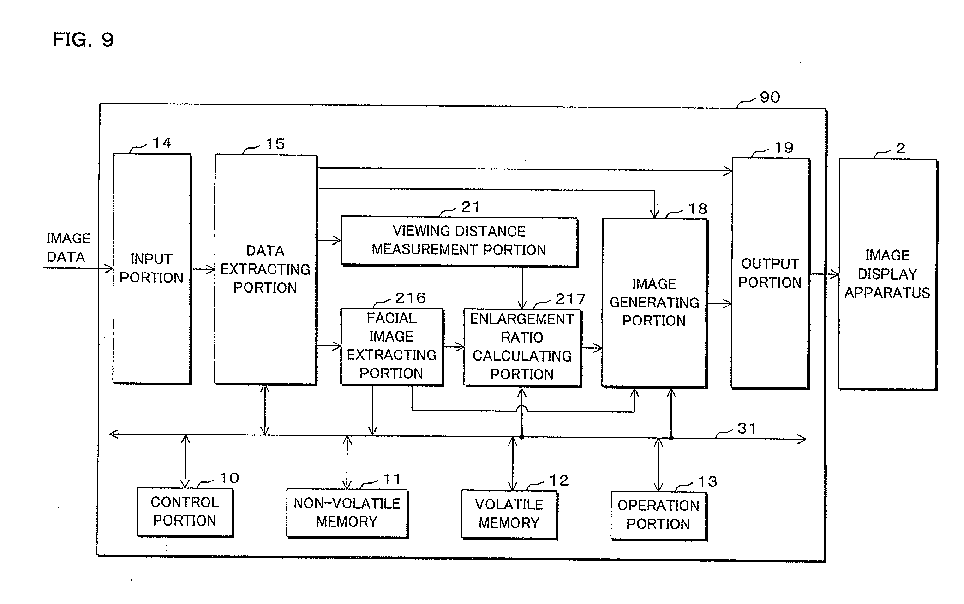

Fig. 9 is a block diagram illustrating a configuration example of the image processing apparatus according to Embodiment 3.

An image processing apparatus 90 according to Embodiment 3 includes a control portion 10, a non-volatile memory 11, a volatile memory 12, an operation portion 13, an input portion 14, a data extracting portion 15, a facial image extracting portion 316, an enlargement ratio calculating portion 317, an image generating portion 18, an output portion 19 and a viewing distance measurement portion 21. The components are connected to one another via a bus 31.

The input portion 14 obtains image data from an image device such as, for example, a digital broadcast tuner, a HD drive, a DVD drive, a personal computer or a digital camera. The image data is compressed image data included in a TS which is compressed and encoded in, for example, MPEG-2 format. The input portion 14 outputs the compressed image data obtained from an image device to the data extracting portion 15.

The data extracting portion 15 decodes the compressed image data obtained from the input portion 14 while analyzing header information, obtains the total number of the entire image (hereinafter referred to as "display image"), the number of vertical pixels and the number of horizontal pixels, and outputs them to the control portion 10. Furthermore, the data extracting portion 15 outputs the decoded image data to the facial image extracting portion 316 and image generating portion 18, or to the output portion 19.

The facial image extracting portion 316 obtains image data from the data extracting portion 15, extracts a facial image from an image corresponding to the image data and obtains the total number of pixels for the extracted facial image. The process of extracting the facial image can utilize a known face recognition technique or object extraction technique. The facial image extracting portion 316 outputs, to the control portion 10, the total number of the extracted facial image, the coordinates of the reference point for the extracted facial image and the number of vertical pixels and the number of horizontal pixels used when the facial image is so cut out as to fit in a rectangle. Moreover, the facial image extracting portion 316 outputs facial image data corresponding to the facial image to the image generating portion 18.

The control portion 10 determines whether or not the enlarging process is to be performed on the facial image as described below.
The control portion 10 obtains the total number of pixels for display image from the data extracting portion 15. Moreover, the control portion 10 obtains the total number of pixels for facial image from the facial image extracting portion 316. Furthermore, the control portion 10 reads out a threshold (THp) from the non-volatile memory 11. The control portion 10 determines whether or not the enlarging process is performed on the facial image with reference to the threshold read out from the non-volatile memory 11.
More specifically, the control portion 10 compares the ratio of the total number of pixels for display image to the total number of pixels for facial image (total number of pixels for display image/ total number of pixels for facial image) with the threshold, and determines that the enlarging process is performed on the facial image if the ratio of the total number of pixels for display image to the total number of pixels for facial image is equal to or more than the threshold. If, on the other hand, the ratio of the total number of pixels for display image to the total number of pixels for facial image is less than the threshold, the control portion 10 determines that no enlarging process is performed on the facial image.

If it is determined that the enlarging process is performed on the facial image, the control portion 10 outputs the total number of pixels, the number of vertical pixels and the number of horizontal pixels for the display image, the total number of pixels, the number of vertical pixels and the number of horizontal pixels for the facial image as well as the coordinates of the reference point for the facial image to the enlargement ratio calculating portion 317. Moreover, if the control portion 10 determines that the enlarging process is performed on the facial image, the data extracting portion 15 outputs facial image data to the image generating portion 18. If, on the other hand, the control portion 10 determines that no enlarging process is performed on the facial image, the data extracting portion 15 directly outputs image data to the output portion 19. Furthermore, the control portion 10 outputs the result of determination on whether or not the enlarging process for the facial image is to be performed.

The enlargement ratio calculating portion 317 calculates the enlargement ratio for facial image (AR_Face) based on the total number of pixels for facial image obtained from the control portion 10 and the total number of pixels for display image obtained from the display image size detecting portion 20. The enlargement ratio for facial image (AR_Face) is calculated by the formula (8).

$$AR\_Face = \alpha \times (T\_pix / P\_pix) \qquad (8)$$

wherein

$\alpha$: any given constant
T_pix: number of pixels for display image
P_pix: number of pixels for facial image

The viewing distance measurement portion 21 measures a viewing distance (D_curr) and outputs a correction ratio with respect to the enlargement ratio calculated by the formula (8) to the enlargement ratio calculating portion 317 based on the measured viewing distance. The method of measuring the viewing distance may include a method of measuring the viewing distance based on a time period during which a ultrasonic wave transmitted from a transmitter installed in the image display apparatus 2 for transmitting ultrasonic waves hits the viewer and reflects thereon and returns to a receiver which is also installed in the image display apparatus 2 for receiving ultrasonic waves, a method of measuring the viewing distance based on the principle of triangulation, or a method of measuring the viewing distance using infrared. A method other than the ones described above may, however, also be utilized.
The viewing distance measurement portion 21 uses the formula (9) to calculate a distance ratio (D_ratio) of the reference viewing distance (D_base) and the viewing distance (D_curr) measured by the method as described above.

$$D\_ratio = D\_curr / D\_base \quad (9)$$

Here, the reference viewing distance (D_base) is set as 3H, as the initial value, which is the standard watching distance for high-vision broadcast so decided as to have a viewing angle to both ends of the screen of 30 degrees. H corresponds to the vertical dimension of the display screen 24 of the image display apparatus 2. It is recognized that the high vision broadcast with the aspect ratio of 16:9 has the standard viewing distance of three times the vertical dimension of the screen (3H). The initial set value for the reference viewing distance (D_base) is a mere example, and is not limited to 3H. The reference viewing distance (D_base) is stored in the non-volatile memory 11 in advance. The reference viewing distance (D_base) may, however, be appropriately be changed to a value set by, for example, a slide bar indicated by GUI, which is provided at the operation portion 13. Thus changed reference viewing distance (D_base) is stored in the non-volatile memory 11.

The viewing distance measurement portion 21 outputs the calculated distance ratio (D_ratio) to the enlargement ratio calculating portion 317.

The enlargement ratio calculating portion 317 obtains the distance ratio (D_ratio) from the viewing distance measurement portion 21 to correct the enlargement ratio (AR_face) calculated according to any one of Embodiments 1 to 3. For example, the enlargement calculating portion 317 multiplies the enlargement ratio calculated by the formula (8) by the distance ratio (D_ratio). That is, the enlargement ratio calculated by the formula (8) is changed as in the formula (10).

$$AR\_face = D\_ratio \times \alpha \times (T\_pix / P\_pix) \quad (10)$$

Moreover, the formulas (6) and (7) in Embodiment 2 will be changed to the formulas (11) and (12).

$$AR\_face = S\_ratio \times D\_ratio \times \alpha \times (T\_pix / P\_pix) \, (11)$$

$$AR\_face = S\_ratio \times D\_ratio \, (12)$$

The enlargement ratio calculating portion 317 outputs the enlargement ratio (AR_face) corrected by any one of the formulas (10) to (12) to the image generating portion 18.

Subsequently, the flow of the image processing performed by the image processing apparatus 90 according to Embodiment 3 will be described.

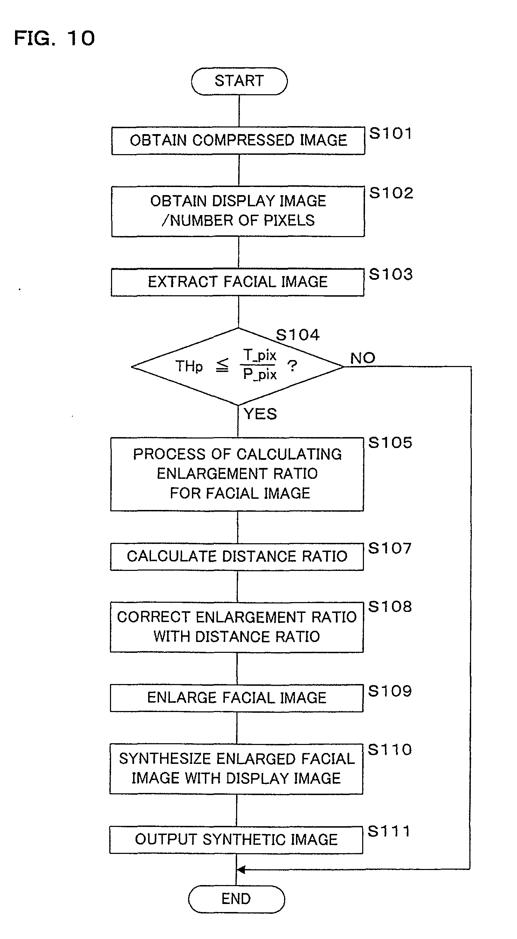

Fig. 10 is a flowchart illustrating the flow of image processing performed by the image processing apparatus 90 according to Embodiment 3.

The input portion 14 obtains compressed image data from the outside (S101).

The data extracting portion 15 decodes the compressed image data obtained from the input portion 14 while analyzing header information and extracting the total number of pixels (T_pix) for the display image 22 to output it to the control portion 10 (S102). Moreover, the data extracting portion 15 outputs image data to the facial image extracting portion 316. The facial image extracting portion 316 extracts a facial image from the image corresponding to the image data obtained from the data extracting portion 15, obtains the total number of pixels for facial image (P_pix) and outputs it to the control portion 10 (S103).

The control portion 10 reads in a threshold (THp) from the non-volatile memory 11, and compares the threshold with the ratio (T_pix /P_pix) of the total number of pixels for display image (T_pix) to the total number of pixels for facial image (P_pix) to determine whether or not the enlarging process is to be performed on the facial image (S104). More specifically, if the ratio (T_pix / P_pix) of the total number of pixels for display image (T_pix) to the total number of pixels for facial image (P_pix) is equal to or higher than the threshold (S104: YES), the control portion 10 determines that the enlarging process is performed on the facial image. In response to this, the enlargement ratio calculating portion 317 calculates the enlargement ratio for facial image (AR_Face) (S105). Subsequently, the enlargement ratio calculating portion 317 calculates a distance ratio (D_ratio) (S107).

The enlargement ratio calculating portion 317 multiplies the distance ratio calculated at step S107 by the enlargement ratio for facial image calculated at step S105 to correct the enlargement ratio calculated at step S105 (S108) and to enlarge the facial image (S109).

The image generating portion 18 enlarges the facial image in accordance with the corrected enlargement ratio (AR_Face) obtained from the enlargement ratio calculating portion 317, generates an enlarged facial image, synthesizes the enlarged facial image and the display image (S110), generates synthetic image data, outputs the generated data to the output portion 19 (S111) and terminates the processing.

If the ratio (T_pix / P_pix) of the total number of pixels for display image 22 (T_pix) to the total number of pixels for facial image (P_pix) is less than the threshold (THp) (S104: NO), the control portion 10 determines that no enlarging process is performed on the facial image. If no enlarging process is performed on the facial image, the output portion 19 outputs the image data obtained from the data extracting portion 15 to the image display apparatus 2, and terminates the processing.

The image display apparatus 2 includes a display screen 24 such as, for example, a liquid-crystal panel, an organic EL display and a plasma display, for displaying an image on the display screen 24 based on the image data obtained from the output portion 19.

In Embodiment 3, the viewing distance measurement portion 21 reads in the reference viewing distance (D_base) from the non-volatile memory 11. The viewing distance measurement portion 21 may alternatively calculate the reference viewing distance (D_base) from the number of vertical pixels I on the display screen 24 using the formula (13).

$$D\_base = 3240 \times H/I \ (13)$$

The number of vertical pixels for the display screen 24 may be obtained from EDID stored in the image display apparatus 2 via DDC signals of HDMI standard, for example.

Embodiment 3 has such a configuration as described above, while the other configurations and functions are similar to those in Embodiment 1. The corresponding parts are therefore denoted by the same reference numbers and will not be described in detail.

With the image processing apparatus 90 according to Embodiment 3, even in the case where the display image size looks small because of a long viewing distance, an image with an enlarged facial image may be generated by correcting the enlargement ratio in accordance with the viewing distance.

According to the image processing apparatus in which the configurations of Embodiments 2 and 3 are combined together, the enlargement ratio may be corrected in accordance with the display image size and viewing distance, to automatically enlarge the facial image even under an undesirable viewing condition. Thus, useful information such as information for identifying an individual, information on emotion and information received by lip reading can be obtained from the enlarged facial image.

It is also possible to employ a configuration including the combination of three forms described in Embodiments 1 to 3. This can provide an image on which more various types of enlargement processing are performed.

In the description for Embodiments 1 to 3, the image processing apparatus is implemented as an independent apparatus. The image processing apparatus according to Embodiments 1 to 3 may, however, also be implemented in a form integrated into the image display apparatus 2. In such a case, the image display apparatus 2 corresponds to a device including a screen, such as a television, a mobile phone, a game machine, a multimedia player, a personal computer, a Personal Digital Assistant (PDA), a projector and a car navigation system, for example.

In Embodiments 1 to 3, the threshold (THp), $\alpha$, the screen size and the reference viewing distance (D_base) may appropriately be changed or set by the slide bar of GUI provided at the operation portion 13. It is, however, understood that the means for changing or setting the above-described set values is not limited to the slide bar with GUI.

When the user watches a video image on an image display apparatus, it is necessary to set in advance if the enlarging process for a facial image is made effective, what kind of reference is used to enlarge the facial image if the enlarging process is made effective, and so forth. An example of a menu screen for the setting will now be described below. The menu screen is, for example, shown on the display in the image display apparatus 2, and is set by, for example, the user operating a remote controller.

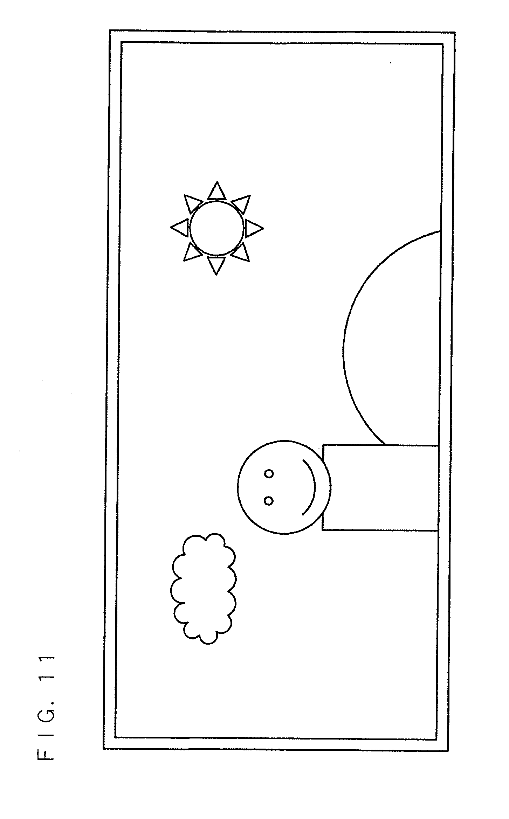

Figs. 11 to 15 are explanatory views sequentially illustrating displays on the menu screen shown on the display of the image display apparatus. The setting is performed on the menu screen regarding whether or not the enlarging process for a facial image is made effective, what kind of reference is used to enlarge the facial image, and so forth.

Fig. 11 is an explanatory view illustrating a screen example displaying an object to be enlarged. In this stage, the menu screen is not shown. From the next stage on, the user sequentially presses a menu button and other switching buttons on the remote controller to change the menu screen in response thereto.

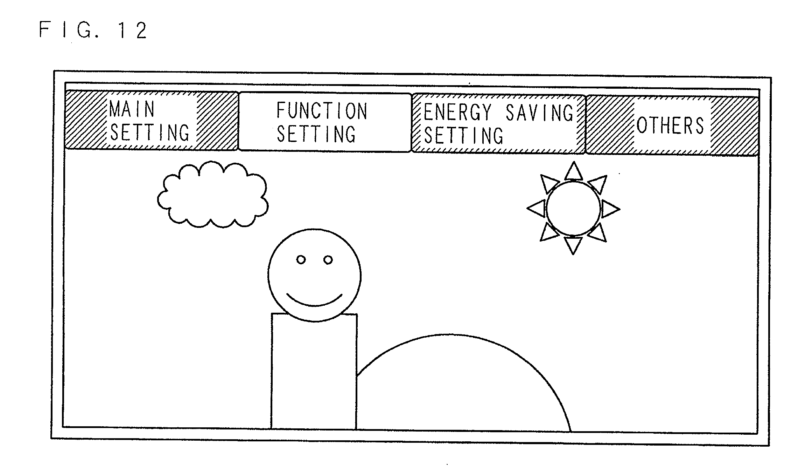

Fig. 12 is an explanatory view illustrating an example of a screen where the first menu screen is displayed at an upper part of the display screen 24 shown in Fig. 11. The first menu screen includes items of "main setting," "function setting," "energy saving setting" and "others." Here, it is assumed that the item "function setting" is selected, which is used for setting related to the function of the enlarging process for the facial image.

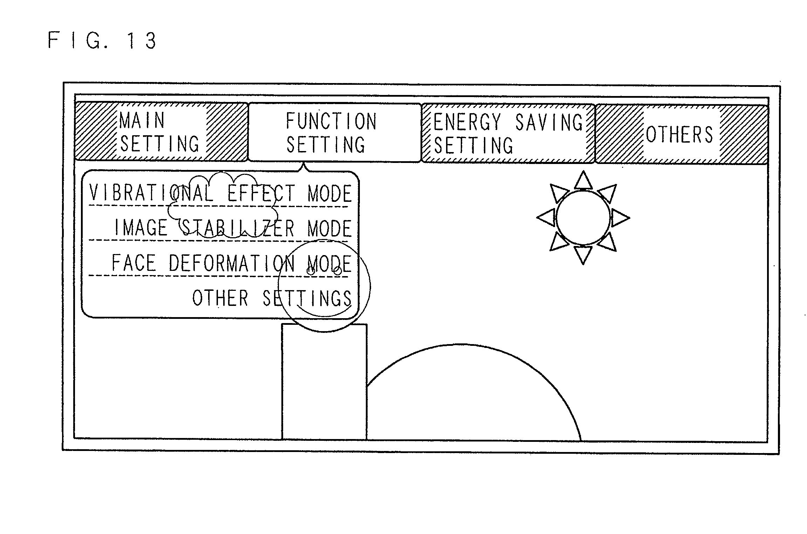

Fig. 13 is an explanatory view illustrating a screen example of the second menu screen newly displayed when "function setting" is selected on the first menu screen shown in Fig. 12. The second menu screen includes items of "vibrational effect mode," "image stabilizer mode," "face deformation mode" and "other settings." Here, the user selects the "face deformation mode" in order to activate the enlarging process for the facial image.

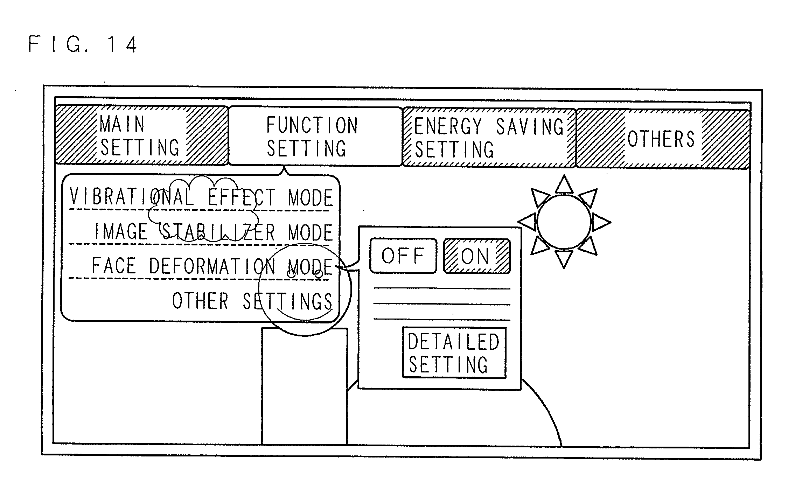

Fig. 14 is an explanatory view illustrating a screen example of the third menu screen newly displayed when "face deformation mode" is selected on the second menu screen shown in Fig. 13. Displayed on the third menu screen are items of the "ON/OFF" for the face deformation mode and "detailed setting" for urging the user to set details when ON is selected.

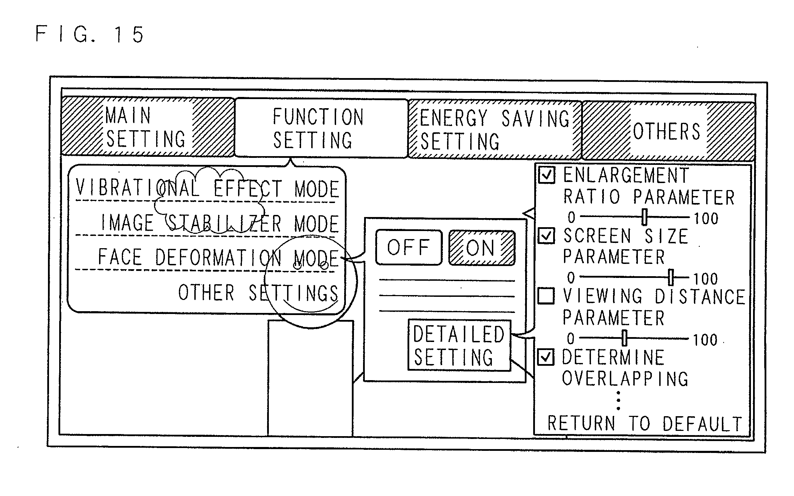

Fig. 15 is an explanatory view illustrating a screen example of the fourth menu screen newly displayed when "detailed setting" is selected on the third menu screen shown in Fig. 14. The fourth menu screen includes "enlargement ratio parameter," "screen size parameter" and "viewing distance parameter." The size of each of the "enlargement ratio parameter," "screen size parameter" and "viewing distance parameter" corresponds to a value between 0 and 100, which can be adjusted by the slide bar. The enlargement ratio parameter corresponds to $\alpha$ in the formula (1), the screen size parameter corresponds to the screen size of the image display apparatus 2, and the viewing distance parameter corresponds to the reference viewing distance.

Embodiment 4

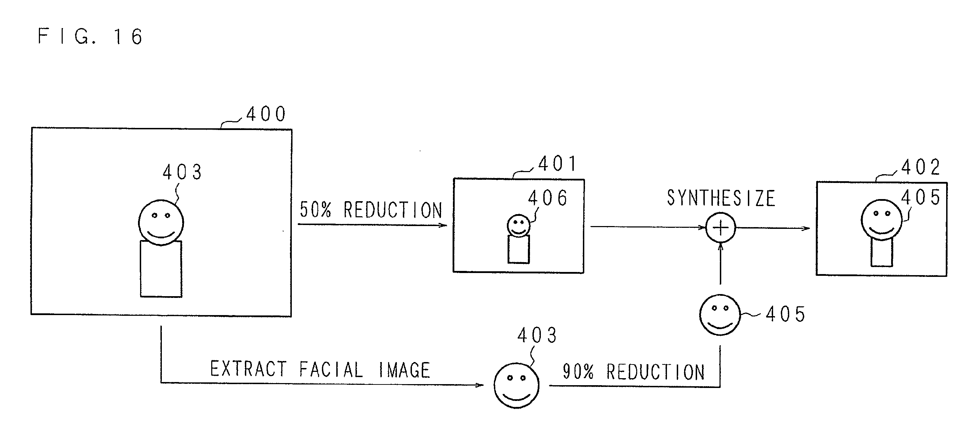

Fig. 16 is an explanatory view illustrating the facial image enlarging process according to Embodiment 4. In Embodiment 4, unlike the embodiment described above, a facial image extracted from an image is reduced to generate a reduced facial image, while synthesizing an image obtained by reducing the above-described image and the reduced facial image, to generate an enlarged facial image as a result. A process executed by, for example, a control portion in a small mobile phone is described below. For example, the control portion obtains an image 401 which is reduced from an input image by 50% (reduction ratio of 0.5), while extracting a facial image 403 from the input image 400. Here, the image 401 corresponds to an image shown on a display screen of a mobile phone. The control portion reduces the facial image 403 by 90% (reduction ratio of 0.9) to obtain a reduced facial image 405. The control portion synthesizes the image 401 and the reduced facial image 405 to obtain an output image 402.

To state this in a general way, if the ratio of reduction from the input image 400 to the image 401 is assumed as f, the reduction ratio for a facial image extracted from the input image 400 may be the enlargement ratio (AR_face) × f. For example, if f is 0.5 and the enlargement ratio (AR_face) is 1.2, the reduction ratio of the facial image 403 will be 0.6, resulting in an enlarged facial image.

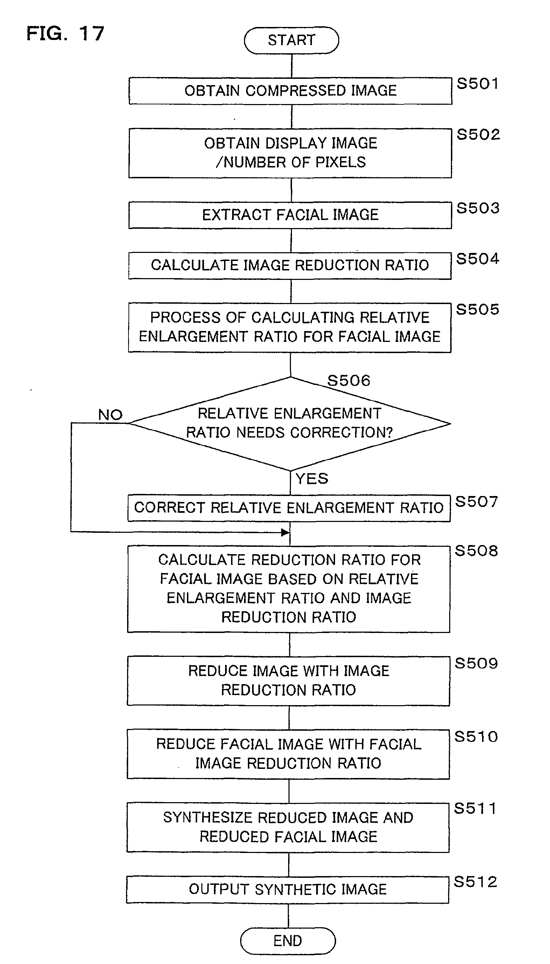

Fig. 17 is a flowchart illustrating the flow of image processing according to Embodiment 4. The control portion obtains an image (S501). The control portion obtains a display image size/number of pixels (S502). The control portion extracts a facial image from the image (S503). The control portion calculates an image reduction ratio (S504). The control portion calculates a relative enlargement ratio (assumed enlargement ratio) of the facial image in accordance with the formula (1) indicated above (S505). The control portion determines whether or not the relative enlargement ratio needs to be corrected (S506). If the control portion determines that the relative enlargement ratio needs to be corrected (S506: YES), it proceeds to step S507. If the control portion determines that the relative enlargement ratio does not need to be corrected (S506: NO), it proceeds to step S508. The control portion corrects a relative enlargement ratio in accordance with the formulas (2) and (3) described above (S507). The control portion calculates a reduction ratio for the facial image by multiplying the relative enlargement ratio by the image reduction ratio (S508). The control portion reduces the image based on the image reduction ratio (S509). The control portion reduces the facial image based on the facial image reduction ratio (S510). The control portion synthesizes the reduced image and the reduced facial image (S511). The control portion outputs a synthetic image (S512).

Embodiment 5

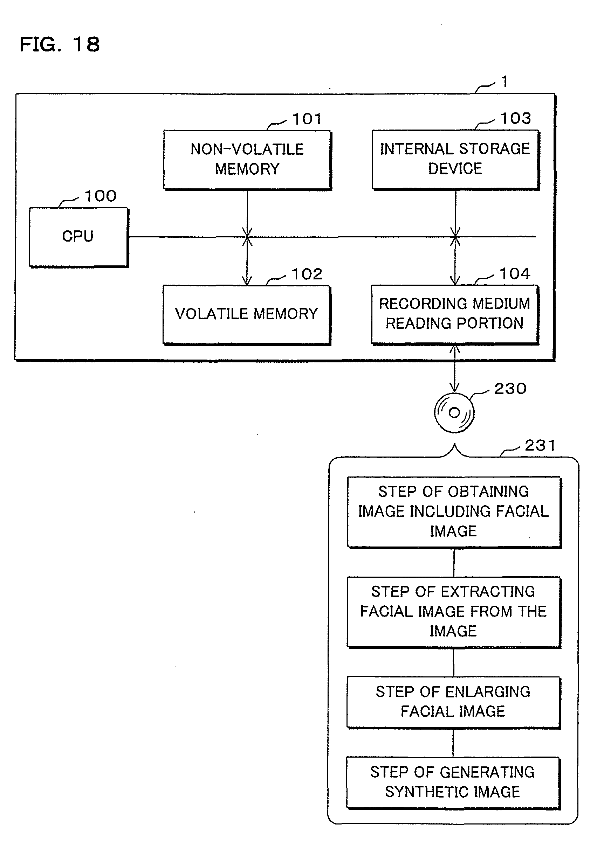

Fig. 18 is a block diagram illustrating a configuration example regarding the execution of a program in the image processing apparatus according to Embodiment 5. In Embodiment 5, the image processing apparatus 1 includes, for example, a non-volatile memory 101, an internal storage device 103 and a recording medium reading portion 104. The CPU 100 reads in a program 231 regarding Embodiments 1 to 4 from the recording medium 230 such as a CD-ROM or DVD-ROM inserted into the recording medium reading portion 104 and stores the program 231 in the non-volatile memory 101 or internal storage device 103. The CPU 100 has a configuration of reading out the program 231 stored in the non-volatile memory 101 or internal storage device 103 to the volatile memory 102 which executes the program 231. The image processing apparatuses 70 and 90 have similar configurations.

The program 231 according to the present invention is not limited to be read out from the recording medium 230 and stored in the non-volatile memory 101 or internal storage device 103, but may also be stored in an external memory such as a memory card. In such a case, the program 231 is read out from the external memory (not shown) connected to the CPU 100 and stored in the non-volatile memory 101 or internal storage device 103. Moreover, communication may be established between a communication unit (not shown) connected to the CPU 100 and an external computer to download the program 231 to the non-volatile memory 101 and to the internal storage device 103.

Variation 1

Though the embodiment described above showed an example where one facial image is displayed on a screen, the enlarging process as described below, for example, may also be executed when more than one persons are simultaneously displayed.

(1) The enlarging process is performed on the facial images for every person regardless of the number of persons.
(2) The enlargement ratio for a facial image is changed in accordance with a priority set for each of the plural persons. That is, a larger enlargement ratio is set for a facial image with a higher priority. For example, the enlargement ratio of the facial image for the person with the highest priority is set as two times, while that for the person with the next highest priority is set as 1.5 times.

Though the method of (1) described above is a simple process, enlarged facial images may overlap with each other when the faces are closely positioned, possibly giving a viewer a sense of discomfort. According to the method of (2) described above, on the other hand, the enlarging process is performed only on facial images for a small number of people with higher priorities, preventing the enlarged facial images from overlapping with each other to some extent, which can be a problem in the method of (1). In particular, the problem of overlapping is solved if only one facial image with the highest priority is enlarged.
Moreover, the facial image of a person shown at the center of a screen may be controlled to be uniformly enlarged instead of utilizing priority. This is because the person shown at the center of the screen has a high likelihood of talking in general.
It is also possible to employ GUI as in the embodiments described above to set the number of facial images to be enlarged (two or more) or the threshold for priority.
The "enlarged facial image" and "not enlarged facial image" may, however, overlap with each other even if the number of facial images to be enlarged is limited to a certain number. To address this, the process of determining overlapping of facial images may further be executed to adjust the enlargement ratio for each of the overlapping facial images such that the facial images do not overlap with each other. The process of determining overlapping of the facial images is effective for any one of (1) and (2) above. Moreover, an image with higher priority may be superposed on an image with a low priority in order to allow overlapping of facial images.

In order to set the priority, for example, lip reading is focused among the information obtained by facial recognition (individual recognition, emotional understanding, lip reading and the like). That is, an area around the mouth (hereinafter also referred to as "mouth area") is focused, and the facial image for a person whose mouth area is moving is preferentially enlarged. This is because a person has a high probability of talking when his/her mouth area is moving.
Furthermore, another method of setting priority includes setting a priority using positional information of sound (positional information of a speaker obtained from sound data). This is the method of preferentially enlarging the facial image of a person shown at a position from which sound is coming, i.e., detecting a person who is speaking and enlarging a facial image of that person, as in the method described above.
For example, when the sound is output by stereo, sound is presented from different positions based on the difference in sound pressure (difference in the magnitude of sound) between right and left channels. If the magnitude is the same at right and left, the user hears the sound from the center. If the sound from the right channel is larger, the sound is presented from a position toward the right side. A priority is set based on such positional information and positional data of the facial image. As for the position of presenting sound, a method referred to as sound pressure panning at 2ch stereo was described above as an example, the method of presenting the number of channels or the position of a sound source is not limited thereto. Here, it is also necessary to add the step of extracting sound data at the data extraction portion.

Variation 2

Related to Variation 1, such a function may also be included that only a facial image of a specific person is enlarged in accordance with a user's preference regardless of whether or not the person is talking. For example, if a user's favorite personality is on a program, only the facial image of that personality may be enlarged. The facial image of the personality is extracted, for example, by accessing a facial image database connected to the Internet, taking in the amount of characteristics of the face of the personality, and using the amount of characteristics to perform face recognition.

Variation 3

When a personal computer is used to view video image contents, a plurality of small display screen frames are provided in a display instead of showing a video image on the entire display of the personal computer. The user may watch a video image displayed in one of the display screen frames while performing another work using another one of the display screen frames. According to the embodiment described above, the facial image of a person shown in a small display screen may be enlarged also in such a case.

Each of Embodiments 1 to 5 as well as Variations 1 to 3 described above is for specifying a facial image using the facial image recognition technique and for enlarging the facial image. Another image recognition technique may, however, be used to specify a part other than a face. It is understood that the specified part may be deformed by changing, i.e. enlarging or reducing, that part.

It should be understood that each of Embodiments 1 to 5 as well as Variations 1 to 3 described above is not to limit the technical aspects of the present invention but to merely exemplify the implementation of the present invention. The present invention can, therefore, be embodied in various forms without departing from its spirit or main characteristics.

Description of Reference Codes

| 1 | image processing apparatus |
|---|---|
| 2 | image display apparatus |
| 10 | control portion |
| 11 | non-volatile memory |
| 12 | volatile memory |
| 13 | operation portion |
| 14 | input portion |
| 15 | data extracting portion |
| 16 | facial image extracting portion |
| 17 | enlargement ratio calculating portion |
| 18 | image generating portion |
| 19 | output portion |
| 20 | image display size detecting portion |
| 21 | viewing distance measurement portion |
| 31 | bus |

**Claims**

1. An image processing apparatus for performing image processing, comprising:

   an image obtaining means for obtaining an image;
   an extracting means for extracting a facial image included in the image obtained by the image obtaining means;
   an enlarging means for enlarging the facial image extracted by the extracting means in accordance with a size of the image obtained by the image obtaining means and a size of the facial image; and
   a means for synthesizing the facial image enlarged by the enlarging means and the image obtained by the image obtaining means.

2. An image processing apparatus for performing image processing, comprising:

   an image obtaining means for obtaining an image;
   an extracting means for extracting a facial image included in the image obtained by the image obtaining means;
   a means for reducing the image obtained by the image obtaining means;
   an obtaining means for obtaining information regarding reduction of an image;
   an enlarging means for enlarging the facial image extracted by the extracting means in accordance with a size of the image obtained by the image obtaining means, the size of the facial image and the information obtained by the obtaining means; and
   a means for synthesizing the facial image enlarged by the enlarging means and the image obtained by the image obtaining means.

3. An image processing apparatus for performing image processing, comprising:

   an image obtaining means for obtaining an image;

an extracting means for extracting a facial image included in the image obtained by the image obtaining means;

a distance measurement means for measuring a distance from an external object;

an enlarging means for enlarging the facial image extracted by the extracting means in accordance with a size of the image obtained by the image obtaining means, a size of the facial image and the distance measured by the distance measurement means; and

a means for synthesizing the facial image enlarged by the enlarging means and the image obtained by the image obtaining means.

4. The image processing apparatus according to any one of Claims 1 to 3, wherein the enlarging means includes:

an enlargement ratio calculating portion for calculating an enlargement ratio based on the number of pixels for said image and the number of pixels for the facial image; and

an enlarging portion for enlarging the facial image in accordance with the enlargement ratio calculated by the enlargement ratio calculating portion.

5. The image processing apparatus according to Claim 4, wherein the enlargement ratio calculating portion calculates the enlargement ratio in accordance with a ratio of the number of pixels for said image to the number of pixels for the facial image.

6. The image processing apparatus according to Claim 4 or 5, further comprising a means for reducing the enlargement ratio if the facial image enlarged in accordance with the enlargement ratio calculated by the enlargement ratio calculating portion exceeds a specific size, wherein

the enlarging portion enlarges the facial image with the enlargement ratio reduced by the enlargement ratio calculating portion.

7. An image processing apparatus for performing image processing, comprising:

an image obtaining means for obtaining an image;

an image reducing means for reducing the image obtained by the image obtaining means;

an extracting means for extracting a facial image from the image obtained by the image obtaining means;

a facial image reducing means for reducing the facial image extracted by the extracting means with a reduction ratio smaller than a reduction ratio for the image reduced by the image reducing means; and

a means for synthesizing the image reduced by the image reducing means and the facial image reduced by the facial image reducing means.

8. An image processing method for performing image processing, comprising:

an image obtaining step of obtaining an image;

an extracting step of extracting a facial image included in the image obtained by the image obtaining step;

an enlarging step of enlarging the facial image extracted by the extracting step in accordance with a size of the image obtained by the image obtaining step and a size of the facial image; and

a step of synthesizing the facial image enlarged by the enlarging step and the image obtained by the image obtaining step.

9. An image processing method for performing image processing, comprising:

an image obtaining step of obtaining an image;

an extracting step of extracting a facial image included in the image obtained by the image obtaining step;

an image reducing step of reducing the image obtained by the image obtaining step;

an obtaining step of obtaining information regarding reduction of an image;

an enlarging step of enlarging the facial image extracted by the extracting step in accordance with a size of the image obtained by the image obtaining step, a size of the facial image and the information obtained by the obtaining step; and

a step of synthesizing the facial image enlarged by the enlarging step and the image obtained by the image obtaining step.

10. An image processing method for performing image processing, comprising:

an image obtaining step of obtaining an image;
an extracting step of extracting a facial image included in the image obtained by the image obtaining step;
a distance measurement step of measuring a distance from an external object;
an enlarging step of enlarging the facial image extracted by the extracting step in accordance with a size of the image obtained by the image obtaining step, a size of the facial image and the distance measured by the distance measurement step; and
a step of synthesizing the facial image enlarged by the enlarging step and the image obtained by the image obtaining step.

11. An image processing program for making a computer perform image processing, making the computer function as:

an extracting means for extracting a facial image from an image including the facial image;
an enlarging means for enlarging the facial image extracted by the extracting means in accordance with a size of said image and a size of the facial image; and
a means for synthesizing the facial image enlarged by the enlarging means and said image.

12. An image processing program for making a computer perform image processing, making the computer function as:

an extracting means for extracting a facial image from an image including the facial image;
a reducing means for reducing an image;
an enlarging means for enlarging the facial image extracted by the extracting means in accordance with a size of said image, a size of the facial image and information regarding reduction of said image; and
a means for synthesizing the facial image enlarged by the enlarging means and said image.

13. An image processing program for making a computer perform image processing, making the computer function as:

an extracting means for extracting a facial image from an image including the facial image;
an enlarging means for enlarging the facial image extracted by the extracting means in accordance with a size of said image, a size of the facial image and a distance from an external object; and
a means for synthesizing the facial image enlarged by the enlarging means and said image.

FIG. 1

EP 2 521 353 A1

IMAGE DATA →

| 14 INPUT PORTION | 15 DATA EXTRACTING PORTION | | | | 19 OUTPUT PORTION | → 2 IMAGE DISPLAY APPARATUS |

1

216 FACIAL IMAGE EXTRACTING PORTION

217 ENLARGEMENT RATIO CALCULATING PORTION

18 IMAGE GENERATING PORTION

31

10 CONTROL PORTION

11 NON-VOLATILE MEMORY

12 VOLATILE MEMORY

13 OPERATION PORTION

F I G. 2

EP 2 521 353 A1

FIG. 3

22

X_face

P_pix

Y_face

(X_base, Y_base)

(0, 0)

Y_all

X_all

$T\_pix = X\_all \times Yall$

F I G. 4

## FIG. 5

```
            ( START )
               │
  ┌────────────────────────────┐
  │   OBTAIN COMPRESSED IMAGE   │ S51
  └────────────────────────────┘
               │
  ┌────────────────────────────┐
  │      OBTAIN DISPLAY IMAGE   │ S52
  │      /NUMBER OF PIXELS      │
  └────────────────────────────┘
               │
  ┌────────────────────────────┐
  │     EXTRACT FACIAL IMAGE    │ S53
  └────────────────────────────┘
               │
             S54
         ◇ THp ≤ T_pix / P_pix ? ◇ ──NO──┐
               │ YES                      │
  ┌────────────────────────────┐          │
  │    CALCULATE ENLARGEMENT    │ S55      │
  │     RATIO FOR FACIAL IMAGE  │          │
  └────────────────────────────┘          │
               │                          │
             S56                          │
  NO── ◇ ENLARGEMENT RATIO               │
        │     NEEDS CORRECTION? ◇         │
  │            │ YES                       │
  │  ┌────────────────────────────┐       │
  │  │   CORRECT ENLARGEMENT RATIO │ S57   │
  │  └────────────────────────────┘       │
  └─────────►│                            │
  ┌────────────────────────────┐          │
  │     ENLARGE FACIAL IMAGE    │ S58      │
  └────────────────────────────┘          │
               │                          │
  ┌────────────────────────────┐          │
  │  SYNTHESIZE ENLARGED FACIAL │ S59      │
  │   IMAGE AND DISPLAY IMAGE   │          │
  └────────────────────────────┘          │
               │                          │
  ┌────────────────────────────┐          │
  │    OUTPUT SYNTHETIC IMAGE   │ S60      │
  └────────────────────────────┘          │
               │◄─────────────────────────┘
            (  END  )
```

The decision at S54 is: $THp \leq \dfrac{T\_pix}{P\_pix}$ ?

EP 2 521 353 A1

FIG. 6

FIG. 7

EP 2 521 353 A1

FIG. 8

```
                    ( START )
                        │
        ┌───────────────────────────────┐
        │   OBTAIN COMPRESSED IMAGE      │  S81
        └───────────────────────────────┘
                        │
        ┌───────────────────────────────┐
        │      OBTAIN DISPLAY IMAGE      │  S82
        │       /NUMBER OF PIXELS        │
        └───────────────────────────────┘
                        │
        ┌───────────────────────────────┐
        │      EXTRACT FACIAL IMAGE      │  S83
        └───────────────────────────────┘
                        │
                       S84
                   ╱         ╲
                  ╱  THp ≦ T_pix ? ╲  NO
                  ╲      P_pix      ╱───────────┐
                   ╲         ╱                  │
                      │ YES                     │
                      │                         │
        ┌───────────────────────────────┐       │
        │     PROCESS OF CALCULATING     │  S85  │
        │       ENLARGEMENT RATIO        │       │
        │        OF FACIAL IMAGE         │       │
        └───────────────────────────────┘       │
                        │                        │
        ┌───────────────────────────────┐       │
        │  CALCULATE SIZE CORRECTION RATIO│ S87  │
        └───────────────────────────────┘       │
                        │                        │
        ┌───────────────────────────────┐       │
        │    CORRECT ENLARGEMENT RATIO   │  S88  │
        │    WITH SIZE CORRECTION RATIO  │       │
        └───────────────────────────────┘       │
                        │                        │
        ┌───────────────────────────────┐       │
        │      ENLARGE FACIAL IMAGE      │  S89  │
        └───────────────────────────────┘       │
                        │                        │
        ┌───────────────────────────────┐       │
        │    SYNTHESIZE ENLARGED FACIAL  │  S90  │
        │     IMAGE WITH DISPLAY IMAGE   │       │
        └───────────────────────────────┘       │
                        │                        │
        ┌───────────────────────────────┐       │
        │     OUTPUT SYNTHETIC IMAGE     │  S91  │
        └───────────────────────────────┘       │
                        │◄───────────────────────┘
                    (  END  )
```

$$THp \leqq \frac{T\_pix}{P\_pix} ?$$

FIG. 9

IMAGE DATA → INPUT PORTION (14) → DATA EXTRACTING PORTION (15)

VIEWING DISTANCE MEASUREMENT PORTION (21)

FACIAL IMAGE EXTRACTING PORTION (216)

ENLARGEMENT RATIO CALCULATING PORTION (217)

IMAGE GENERATING PORTION (18)

OUTPUT PORTION (19)

IMAGE DISPLAY APPARATUS (2)

CONTROL PORTION (10)

NON-VOLATILE MEMORY (11)

VOLATILE MEMORY (12)

OPERATION PORTION (13)

90

31

EP 2 521 353 A1

## FIG. 10

```
                    ┌──────────────┐
                    (    START     )
                    └──────────────┘
                           │
          ┌────────────────────────────────┐  S101
          │   OBTAIN COMPRESSED IMAGE       │
          └────────────────────────────────┘
                           │
          ┌────────────────────────────────┐  S102
          │   OBTAIN DISPLAY IMAGE          │
          │   /NUMBER OF PIXELS             │
          └────────────────────────────────┘
                           │
          ┌────────────────────────────────┐  S103
          │   EXTRACT FACIAL IMAGE          │
          └────────────────────────────────┘
                           │
                        S104
                    ◇─────────────◇   NO
            THp ≦ T_pix/P_pix ?  ──────────┐
                    ◇─────────────◇        │
                        │ YES              │
          ┌────────────────────────────────┐  S105
          │   PROCESS OF CALCULATING        │
          │   ENLARGEMENT RATIO             │
          │   FOR FACIAL IMAGE              │
          └────────────────────────────────┘
                           │
          ┌────────────────────────────────┐  S107
          │   CALCULATE DISTANCE RATIO      │
          └────────────────────────────────┘
                           │
          ┌────────────────────────────────┐  S108
          │   CORRECT ENLARGEMENT RATIO     │
          │   WITH DISTANCE RATIO           │
          └────────────────────────────────┘
                           │
          ┌────────────────────────────────┐  S109
          │   ENLARGE FACIAL IMAGE          │
          └────────────────────────────────┘
                           │
          ┌────────────────────────────────┐  S110
          │   SYNTHESIZE ENLARGED FACIAL    │
          │   IMAGE WITH DISPLAY IMAGE      │
          └────────────────────────────────┘
                           │
          ┌────────────────────────────────┐  S111
          │   OUTPUT SYNTHETIC IMAGE        │
          └────────────────────────────────┘
                           │◄─────────────────┘
                    ┌──────────────┐
                    (     END      )
                    └──────────────┘
```

Decision at S104: $THp \leqq \dfrac{T\_pix}{P\_pix}$ ?

F I G. 1 1

EP 2 521 353 A1

FIG. 12

| MAIN SETTING | FUNCTION SETTING | ENERGY SAVING SETTING | OTHERS |

FIG. 13

| MAIN SETTING | FUNCTION SETTING | ENERGY SAVING SETTING | OTHERS |
|---|---|---|---|

VIBRATIONAL EFFECT MODE

IMAGE STABILIZER MODE

FACE DEFORMATION MODE

OTHER SETTINGS

EP 2 521 353 A1

FIG. 14

EP 2 521 353 A1

FIG. 15

| MAIN SETTING | FUNCTION SETTING | ENERGY SAVING SETTING | OTHERS |

VIBRATIONAL EFFECT MODE

IMAGE STABILIZER MODE

FACE DEFORMATION MODE

OTHER SETTINGS

OFF | ON

DETAILED SETTING

☑ ENLARGEMENT RATIO PARAMETER
0 ———————— 100

☑ SCREEN SIZE PARAMETER
0 ———————— 100

☐ VIEWING DISTANCE PARAMETER
0 ———————— 100

☑ DETERMINE OVERLAPPING
⋮

RETURN TO DEFAULT

EP 2 521 353 A1

FIG. 16

400

403

50% REDUCTION

401
406

SYNTHESIZE

402
405

EXTRACT FACIAL IMAGE

403

90% REDUCTION

405

EP 2 521 353 A1

**FIG. 17**

START

| OBTAIN COMPRESSED IMAGE | S501 |

| OBTAIN DISPLAY IMAGE /NUMBER OF PIXELS | S502 |

| EXTRACT FACIAL IMAGE | S503 |

| CALCULATE IMAGE REDUCTION RATIO | S504 |

| PROCESS OF CALCULATING RELATIVE ENLARGEMENT RATIO FOR FACIAL IMAGE | S505 |

S506

RELATIVE ENLARGEMENT RATIO NEEDS CORRECTION?

NO

YES

| CORRECT RELATIVE ENLARGEMENT RATIO | S507 |

| CALCULATE REDUCTION RATIO FOR FACIAL IMAGE BASED ON RELATIVE ENLARGEMENT RATIO AND IMAGE REDUCTION RATIO | S508 |

| REDUCE IMAGE WITH IMAGE REDUCTION RATIO | S509 |

| REDUCE FACIAL IMAGE WITH FACIAL IMAGE REDUCTION RATIO | S510 |

| SYNTHESIZE REDUCED IMAGE AND REDUCED FACIAL IMAGE | S511 |

| OUTPUT SYNTHETIC IMAGE | S512 |

END

FIG. 18

# INTERNATIONAL SEARCH REPORT

| | International application No. |
|---|---|
| | PCT/JP2010/072738 |

**A. CLASSIFICATION OF SUBJECT MATTER**
*H04N7/173*(2011.01)i

According to International Patent Classification (IPC) or to both national classification and IPC

**B. FIELDS SEARCHED**

Minimum documentation searched (classification system followed by classification symbols)
H04N7/173

Documentation searched other than minimum documentation to the extent that such documents are included in the fields searched
Jitsuyo Shinan Koho        1922–1996   Jitsuyo Shinan Toroku Koho   1996–2011
Kokai Jitsuyo Shinan Koho  1971–2011   Toroku Jitsuyo Shinan Koho   1994–2011

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X | JP 2005-311888 A (Omron Corp.),<br>04 November 2005 (04.11.2005),<br>paragraphs [0012] to [0013]; fig. 20<br>& US 2005/0251015 A1   & EP 1589478 A3<br>& EP 1589478 A2       & CN 1691740 A | 1-13 |
| X | JP 2008-236489 A (Fujifilm Corp.),<br>02 October 2008 (02.10.2008),<br>paragraphs [0003], [0080]; fig. 14<br>(Family: none) | 1-13 |

☒ Further documents are listed in the continuation of Box C.       ☐ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 05 January, 2011 (05.01.11) | 18 January, 2011 (18.01.11) |

| Name and mailing address of the ISA/ | Authorized officer |
|---|---|
| Japanese Patent Office | |
| Facsimile No. | Telephone No. |

Form PCT/ISA/210 (second sheet) (July 2009)

EP 2 521 353 A1

**INTERNATIONAL SEARCH REPORT**

International application No.

PCT/JP2010/072738

C (Continuation).  DOCUMENTS CONSIDERED TO BE RELEVANT

| Category* | Citation of document, with indication, where appropriate, of the relevant passages | Relevant to claim No. |
|---|---|---|
| A | JP 2005-318515 A  (Fuji Photo Film Co., Ltd.),<br>10 November 2005 (10.11.2005),<br>claim 22<br>& US 2005/0219393 A1    & US 2007/0242143 A1<br>& KR 10-2006-0086808 A   & CN 1812492 A<br>& KR 10-2007-0103327 A   & KR 10-2008-0012249 A<br>& TW 289807 B | 1-13 |
| A | JP 2006-261711 A  (Seiko Epson Corp.),<br>28 September 2006 (28.09.2006),<br>paragraph [0007]<br>(Family: none) | 1-13 |

Form PCT/ISA/210 (continuation of second sheet) (July 2009)

**EP 2 521 353 A1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2004313225 A